# EUROPEAN PATENT SPECIFICATION

(11) **EP 4 187 129 B1**
(45) Date of publication and mention of the grant of the patent: **04.11.2026**
(21) Application number: 21850249.0
(22) Date of filing: 20.02.2021
(51) Int. Cl.: F16H 57/08, F16H 1/32, F16H 1/34

(54) **INTERNAL MESHING PLANETARY GEAR DEVICE AND ACTUATOR**
INNENVERZAHNTE PLANETENGETRIEBEVORRICHTUNG UND AKTUATOR
DISPOSITIF D'ENGRENAGE PLANÉTAIRE À ENGRÈNEMENT INTERNE ET ACTIONNEUR

(30) Priority: 29.07.2020 JP 2020128085
(43) Date of publication of application: 31.05.2023
(73) Proprietor: Midea Group Co., Ltd., Foshan, Guangdong 528311 (CN); Guangdong Jiya Precision Machinery Technology Co., Ltd, Foshan, Guangdong 528315 (CN); GD Midea Air-Conditioning Equipment Co., Ltd., Foshan, Guangdong 528311 (CN)
(72) Inventor: WANG, Gang, Osaka 5320003 (JP); LIN, Wenjie, Osaka 5320003 (JP); MINEGISHI, Kiyoji, Osaka 5320003 (JP); GUO, Ziming, Osaka 5320003 (JP); ISAJI, Tsuyoshi, Osaka 5320003 (JP)
(74) Representative: RGTH
(86) International application number: PCT/CN2021/077123
(87) International publication number: WO 2022/021862

(56) References cited:
- WO-A1-2020/031891
- CN-A- 102 472 368
- CN-A- 103 807 420
- CN-A- 104 565 217
- JP-A- 2017 137 989
- JP-A- S6 383 432
- JP-B2- 5 832 959
- JP-B2- 6 219 788

## Description

### TECHNICAL FIELD

The invention generally relates to an internal-meshing planetary gear device and an actuator, and in particular to an internal-meshing planetary gear device in which a planetary gear having external teeth is arranged on an inner side of an internally toothed gear having internal teeth, and an actuator.

### BACKGROUND

As a related art, a so-called eccentric swinging type gear device (e.g., referring to Patent Document 1) of which a planetary gear swings eccentrically while internally meshes with an internally toothed gear is known. In the gear device of the related art, an eccentric body is integrally formed with an input shaft, and the planetary gear is mounted in the eccentric body via an eccentric body bearing. External teeth with an arc tooth shape or the like are formed on periphery of the planetary gear.

The internally toothed gear is composed of mounting multiple pins (roller pins) constituting internal teeth one-by-one into an inner peripheral surface of a gear body (internally toothed gear body) used as a housing in a free rotation manner. In the planetary gear, multiple inner pin holes (inner roller holes) are formed at proper intervals in a circumferential direction, and inner pins and inner rollers are inserted into the inner pin holes. The inner pin is connected to a bracket at an end side in an axial direction thereof, and the bracket is supported on the housing via a bearing member (cross roller) in a free rotation manner. The gear device may be used as a gear device which takes out, from the bracket, rotation of the planetary gear corresponding to a self-rotation component when the internally toothed gear is fixed.

Prior art document JP 5832959 B2 discloses a planetary gear device including an external gear; an internal gear; a pair of first and second flange members; a carrier pin for coupling the first and second flange members with each other; an output shaft integrated with the first flange member; and an output pinion provided in the output shaft, where at least one end side of the carrier pin is fitted into the first flange member.

Prior art document JP 56383432 A , which forms the basis of the two-part form of claim 1, discloses an internal gear serving also as a casing on one side and the other side being covered by a cover and a bearing being interposed between an inner pin holding flange and an inner gear.

Prior art document JP 6219788 B relates to a gear device series comprising an inner tooth gear in which inner teeth are constituted of outer pins, and a regulation member which abuts on regulated parts arranged at the outer pins and regulates the movement of the outer pins in a radial direction.

### SUMMARY

In the structure of the above related art, multiple inner pins for transmitting power between the bracket and the planetary gear are held only by the bracket, which is difficult to improve centering precision of multiple inner pins, and bad conditions such as generation of vibration, reduction of transmission efficiency, or the like may occur due to poor centering.

An object of the invention is to provide an internal-meshing planetary gear device and an actuator which are difficult to generate bad conditions due to poor centering of multiple inner pins.

An internal-meshing planetary gear device according to the invention comprises an internally toothed gear, a planetary gear, multiple inner pins, and a support body. The internally toothed gear comprises a gear body with an annular shape, and multiple pins which are held on an inner peripheral surface of the gear body in a self-rotatable state and constitute internal teeth. The planetary gear comprises external teeth partially meshing with the internal teeth. The multiple inner pins revolve in multiple inner pin holes formed in the planetary gear and rotate relative to the gear body, in a state where the multiple inner pins are inserted into the multiple inner pin holes respectively. The support body has an annular shape and supports the multiple inner pins. Position of the support body is limited by placing an outer peripheral surface thereof in contact with the multiple pins. The internal-meshing planetary gear device further comprises a bearing member, wherein the bearing member comprising an outer ring, and an inner ring arranged on an inner side of the outer ring, and wherein the inner ring is supported to be rotatable relative to the outer ring, wherein the gear body is fixed to the outer ring, the planetary gear is arranged between the support body and the inner ring in an axial direction of the support body, the support body and the inner ring are respectively in contact with two end portions of the plurality of pins.

An actuator according to the invention comprises the internal-meshing planetary gear device and a driving source. The driving source generates a driving force to swing the planetary gear.

### BRIEF DESCRIPTION OF THE DRAWINGS

FIG. 1 is a perspective view showing a diagrammatic structure of an actuator comprising an internal-meshing planetary gear device according to an embodiment.
FIG. 2 is a diagrammatic exploded perspective view of the above internal-meshing planetary gear device observed from an output side of an rotation axis.
FIG. 3 is a diagrammatic cross-sectional view of the above internal-meshing planetary gear device.
FIG. 4 is a cross-sectional view of a line A1-A1 of FIG. 3, showing the above internal-meshing planetary gear device.
FIG. 5A is a perspective view showing a planetary gear of the above internal-meshing planetary gear device by way of monomer.
FIG. 5B is a front view showing a planetary gear of the above internal-meshing planetary gear device by way of monomer.
FIG. 6A is a perspective view showing a bearing member of the above internal-meshing planetary gear device by way of monomer.
FIG. 6B is a front view showing a bearing member of the above internal-meshing planetary gear device by way of monomer.
FIG. 7A is a perspective view showing an eccentric shaft of the above internal-meshing planetary gear device by way of monomer.
FIG. 7B is a front view showing an eccentric shaft of the above internal-meshing planetary gear device by way of monomer.
FIG. 8A is a perspective view showing a support body of the above internal-meshing planetary gear device by way of monomer.
FIG. 8B is a front view showing a support body of the above internal-meshing planetary gear device by way of monomer.
FIG. 9 is an enlarged view of a region Z1 of FIG. 3, showing the above internal-meshing planetary gear device.
FIG. 10 is a cross-sectional view of a line B1-B1 of FIG. 3, showing the above internal-meshing planetary gear device.
FIG. 11 is a diagrammatic cross-sectional view showing major portions of an internal-meshing planetary gear device according to another embodiment.

### DETAILED DESCRIPTION

### (1) Summary

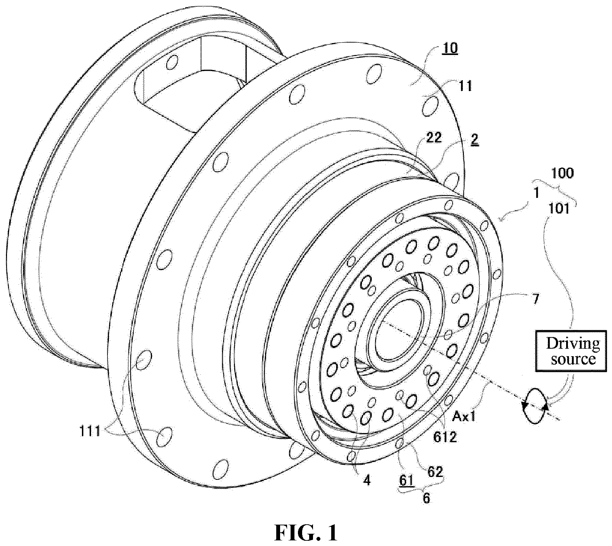

Hereinafter, summary of an internal-meshing planetary gear device 1 of the embodiment is explained with reference to FIG. 1 to FIG. 3. Drawings referred by embodiments of the invention are schematic views, and respective ratios of sizes and thicknesses of structural elements in the drawings do not necessarily reflect actual size ratios. For example, tooth shapes, sizes, tooth number, or the like of internal teeth 21 and external teeth 31 in FIG. 1 to FIG. 3 are merely shown schematically for illustration, and are not aimed to be limited to the shapes as shown.

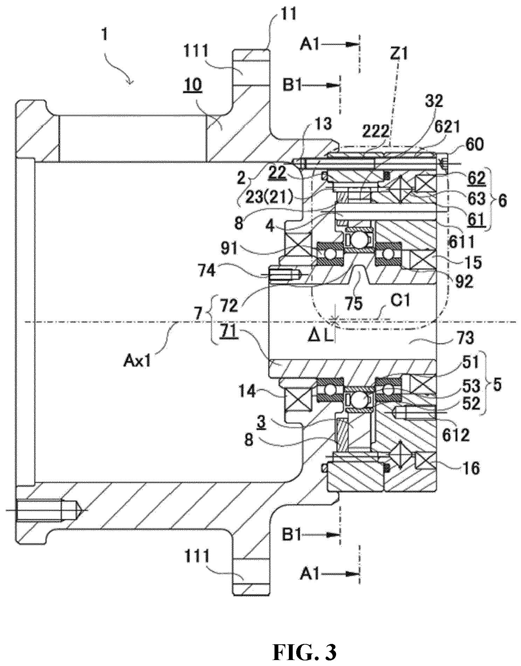

The internal-meshing planetary gear device 1 (hereinafter, referred to as "gear device 1" for abbreviation) of the embodiment is a gear device comprising an internally toothed gear 2, a planetary gear 3, and multiple inner pins 4. In the gear device 1, the planetary gear 3 is arranged on an inner side of the internally toothed gear 2 with an annular shape, and an eccentric body bearing 5 is arranged on an inner side of the planetary gear 3. The eccentric body bearing 5 comprises an eccentric body inner ring 51 and an eccentric body outer ring 52, and the eccentric body inner ring 51 rotates (eccentric motion) around an rotation axis Ax1 (referring to FIG. 3) offset from center C1 (referring to FIG. 3) of the eccentric body inner ring 51, thereby allowing the planetary gear 3 to swing. The eccentric body inner ring 51 rotates (eccentric motion) around the rotation axis Ax1, for example, by rotation of an eccentric shaft 7 inserted into the eccentric body inner ring 51. Furthermore, the internal-meshing planetary gear device 1 further comprises a bearing member 6, wherein the bearing member 6 comprising an outer ring 62 and an inner ring 61. The inner ring 61 is arranged on an inner side of the outer ring 62 and is supported to be rotatable relative to the outer ring 62.

The internally toothed gear 2 has internal teeth 21 and is fixed to the outer ring 62. Especially in the embodiment, the internally toothed gear 2 has a gear body 22 with an annular shape and multiple pins 23. Multiple pins 23 are held on an inner peripheral surface 221 of the gear body 22 in a self-rotatable state, and constitute the internal teeth 21. The planetary gear 3 has external teeth 31 partially meshing with the internal teeth 21. That is, on the inner side of the internally toothed gear 2, the planetary gear 3 is internally tangential to the internally toothed gear 2 to form a state in which a part of the external teeth 31 is meshed with a part of the internal teeth 21. In this state, the planetary gear 3 swings when the eccentric shaft 7 rotates, a meshing position of the internal tooth 21 and the external tooth 31 moves in a circumferential direction of the internally toothed gear 2, and relative rotation corresponding to a difference between the tooth number of the planetary gear 3 and the internally toothed gear 2 is generated between the two gears (the internally toothed gear 2 and the planetary gear 3). Here, when the internally toothed gear 2 is fixed, the planetary gear 3 rotates (self-rotation) along with the relative rotation of the two gears. As a result, it is possible to obtain, from the planetary gear 3, a rotational output which is decelerated at a relatively high reduction ratio corresponding to the difference between the tooth number of the two gears.

Such gear device 1 is used in such a way that rotation of the planetary gear 3 corresponding to a self-rotation component is taken out, as for example rotation of an output shaft integrated with the inner ring 61 of the bearing member 6. Therefore, the gear device 1 takes the eccentric shaft 7 as an input side and takes the output shaft as an output side, to achieve a function of a gear device with a relatively high reduction ratio. Therefore, in the gear device 1 of the embodiment, in order to transmit rotation of the planetary gear 3 corresponding to a self-rotation component to the inner ring 61 of the bearing member 6, multiple inner pins 4 are used to connect the planetary gear 3 to the inner ring 61. Multiple inner pins 4 revolve in multiple inner pin holes 32 formed in the planetary gear 3 and relatively rotate relative to the internally toothed gear 2, in a state where multiple inner pins are inserted into multiple inner pin holes 32 respectively. That is, diameter of the inner pin hole 32 is greater than that of the inner pin 4, and the inner pin 4 may move by revolving in the inner pin hole 32, in a state where it is inserted into the inner pin hole 32. Furthermore, a swinging component of the planetary gear 3, i.e., a revolution component of the planetary gear 3, is absorbed by play-embedding of the inner pin 4 to the inner pin hole 32 of the planetary gear 3. In other words, multiple inner pins 4 move by revolving in multiple inner pin holes 32 respectively, thereby absorbing the swinging component of the planetary gear 3. Therefore, rotation (self-rotation component) of the planetary gear 3, except the swinging component (revolution component) of the planetary gear 3, is transmitted to the inner ring 61 of the bearing member 6 through multiple inner pins 4.

However, in such gear device 1, the inner pin 4 is revolved in the inner pin bore 32 of the planetary gear 3, while rotation of the planetary gear 3 is transmitted to multiple inner pins 4. Therefore, as a first related art, a technique of using an inner roller which is assembled in the inner pin 4 to be rotatable with the inner pin 4 as an shaft is known. That is, in the first related art, the inner pin 4 is kept in a state where it is pressed into the inner ring 61 (or a bracket integrated with the inner ring 61), and when the inner pin 4 revolves in the inner pin hole 32, the inner pin 4 slides relative to an inner peripheral surface 321 of the inner pin hole 32. Therefore, as the first related art, the inner roller is used to reduce loss caused by a frictional resistance between the inner peripheral surface 321 of the inner pin hole 32 and the inner pin 4. However, when a structure comprising the inner roller is used like the first related art, the inner pin hole 32 is required to have a diameter enabling the inner pin 4 with the inner roller to revolve, and the inner pin hole 32 is difficult to be miniaturized. When the inner pin hole 32 is difficult to be miniaturized, miniaturization of the planetary gear 3 (especially to have a small diameter) is hindered, and even miniaturization of the whole gear device 1 is hindered. The gear device 1 of the embodiment may provide an internal-meshing planetary gear device 1 which is easy to be miniaturized through the following structures.

That is, as shown in FIG. 1 to FIG. 3, the gear device 1 of the embodiment comprises a bearing member 6, an internally toothed gear 2, a planetary gear 3 and multiple inner pins 4. The bearing member 6 has an outer ring 62 and an inner ring 61 arranged on an inner side of the outer ring 62. The inner ring 61 is supported to be relatively rotatable relative to the outer ring 62. The internally toothed gear 2 has internal teeth 21 and is fixed to the outer ring 62. The planetary gear 3 has external teeth 31 partially meshing with the internal teeth 21. Multiple inner pins 4 revolve in multiple inner pin holes 32 formed in the planetary gear 3 and relatively rotate relative to the internally toothed gear 2, in a state where multiple inner pins are inserted into multiple inner pin holes 32 respectively. Here each of multiple inner pins 4 is held in the inner ring 61 in a self-rotatable state. Furthermore, at least a part of each of multiple inner pins 4 is arranged at the same position as the bearing member 6 in an axial direction of the bearing member 6.

According to this configuration, each of multiple inner pins 4 is held in the inner ring 61 in a self-rotatable state, therefore, the inner pin 4 itself may self-rotate when the inner pin 4 revolves in the inner pin hole 32. Therefore, loss caused by a frictional resistance between the inner peripheral surface 321 of the inner pin hole 32 and the inner pin 4 may be reduced even without using the inner roller assembled on the inner pin 4 and rotatable with the inner pin 4 as a shaft. Therefore, in the gear device 1 of the embodiment, it is unnecessary to provide an inner roller, so that the gear device has an advantage of being easy to be miniaturized. Furthermore, at least a part of each of multiple inner pins 4 is arranged at the same position as the bearing member 6 in an axial direction of the bearing member 6, so that size of the gear device 1 in the axial direction of the bearing member 6 may be suppressed to be small. That is, compared with a structure where the bearing member 6 is in parallel with (opposite to) the inner pin 4 along the axial direction of the bearing member 6, in the gear device 1 of the embodiment, size of the gear device 1 in the axial direction may be reduced, thereby contributing to further miniaturization (thinning) of the gear device 1.

Furthermore, when size of the planetary gear 3 is the same as that of the first related art, compared with the first related art for example, the number (amount) of inner pins 4 may be increased to smooth transmission of the rotation, or the inner pin 4 becomes thicker to improve strength.

Furthermore, in such gear device 1, the inner pin 4 is required to revolve in the inner pin bore 32 of the planetary gear 3. Therefore, as a second related art, there is a situation where multiple inner pins 4 are held by the inner ring 61 (or a bracket integrated with the inner ring 61) only. According to the second related art, it is difficult to improve centering precision of multiple inner pins 4, and bad conditions such as generation of vibration, reduction of transmission efficiency, or the like may occur due to poor centering. That is, multiple inner pins 4 revolve in the inner pin holes 32 respectively and relatively rotate relative to the internally toothed gear 2, thereby transmitting the self-rotation component of the planetary gear 3 to the inner ring 61 of the bearing member 6. At this time, when centering precision of multiple inner pins 4 is not enough so that rotation axes of multiple inner pins 4 deviate or incline relative to a rotation axis of the inner ring 61, multiple inner pins 4 generate a poor centering state, which may result in bad conditions such as generation of vibration, reduction of transmission efficiency, or the like. The gear device 1 of the embodiment may provide an internal-meshing planetary gear device 1 which is difficult to generate bad conditions due to poor centering of multiple inner pins 4, through the following structures.

That is, as shown in FIG. 1 to FIG. 3, the gear device 1 of the embodiment comprises an internally toothed gear 2, a planetary gear 3, multiple inner pins 4, and a support body 8. The internally toothed gear 2 has a gear body 22 with an annular shape and multiple pins 23. Multiple pins 23 are held on an inner peripheral surface 221 of the gear body 22 in a self-rotatable state, and constitute the internal teeth 21. The planetary gear 3 has external teeth 31 partially meshing with the internal teeth 21. Multiple inner pins 4 revolve in multiple inner pin holes 32 formed in the planetary gear 3 and relatively rotate relative to the gear body 22, in a state where multiple inner pins are inserted into multiple inner pin holes 32 respectively. The support body 8 has an annular shape and supports multiple inner pins 4. Here position of the support body 8 is limited by contacting an outer peripheral surface 81 thereof with multiple pins 23.

According to this configuration, multiple inner pins 4 are supported by the support body 8 with an annular shape, therefore multiple inner pins 4 are constrained by the support body 8, which may suppress relative deviation and inclination of multiple inner pins 4. Furthermore, the outer peripheral surface 81 of the support body 8 is in contact with multiple pins 23, thereby limiting position of the support body 8. In summary, centering of the support body 8 is performed by multiple pins 23, as a result, centering of multiple inner pins 4 supported by the support body 8 is also performed by multiple pins 23. Therefore, according to the gear device 1 of the embodiment, it is easy to improve centering precision of multiple inner pins 4, and the gear device has an advantage of being difficult to generate bad conditions due to poor centering of multiple inner pins 4.

Furthermore, as shown in FIG. 1, the gear device 1 of the embodiment constitutes an actuator 100 together with a driving source 101. In other words, the actuator 100 of the embodiment comprises the gear device 1 and the driving source 101. The driving source 101 generates a driving force to swing the planetary gear 3. Specifically, the driving source 101 rotates the eccentric shaft 7 with the rotation axis Ax1 as the center, thereby swinging the planetary gear 3.

### (2) Definition

"annular shape" stated in the embodiments of the invention refers to a shape such as a ring (circle) which forms an enclosed space (area) on an inner side when it is observed at least in a top view, and is not limited to a circular shape (circular ring shape) which is a perfect circle when it is observed in a top view, for example, may also be an elliptical shape, a polygonal shape, or the like. Furthermore, even though a shape has a bottom such as a cup shape, it is contained within "annular shape" as long as its peripheral wall has an annular shape.

"play-embedding" in the embodiments of the invention refers to a state of embedding with a clearance (gap), and the inner pin hole 32 is a hole for play-embedding the inner pin 4. That is, the inner pin 4 is inserted into the inner pin hole 32 in a state of ensuring a margin of space (gap) between the inner pin and the inner peripheral surface 321 of the inner pin hole 32. In other words, diameter of a part of the inner pin 4 at least inserted into the inner pin hole 32 is smaller (thinner) than that of the inner pin hole 32. Therefore, when the inner pin 4 is inserted into the inner pin hole 32, the inner pin 4 may move in the inner pin hole 32, that is, the inner pin 4 may relatively move relative to center of the inner pin hole 32. Therefore, the inner pin 4 may revolve in the inner pin bore 32. However, it is unnecessary to ensure a gap between the inner peripheral surface 321 of the inner pin hole 32 and the inner pin 4 to be used as a cavity, for example, fluid such as a liquid or the like may also be filled into the gap.

"revolve" stated in the embodiments of the invention means that an object rotates around a rotation axis other than a central axis passing through center (center of gravity) of the object, and when the object revolves, center of the object moves along a revolution orbit with the rotation axis as the center. Therefore, for example, in case that an object rotates with an eccentric axis parallel to a central axis passing through center (center of gravity) of the object as the center, the object revolves with the eccentric axis as a rotation axis. As an example, the inner pin 4 revolves in the inner pin hole 32 by rotating around a rotation axis passing through center of the inner pin hole 32.

Furthermore, in the embodiments of the invention, sometimes one side (left side of FIG. 3) of the rotation axis Ax1 is referred to as an "input side", and the other side (right side of FIG. 3) of the rotation axis Ax1 is referred to as an "output side". In the example of FIG. 3, rotation is given to an rotation body (the eccentric body inner ring 51) from "input side" of the rotation axis Ax1, and rotation of multiple inner pins 4 (the inner ring 61) is taken out from "output side" of the rotation axis Ax1. However, "input side" and "output side" are merely labels assigned for illustration, and are not aimed to limit a positional relationship between input and output observed from gear device 1.

"rotation axis" stated in the embodiments of the invention refers to a virtual axis (straight line) which is center of a rotational motion of a rotation body. That is, the rotation axis Ax1 is a virtual axis without an entity. The eccentric body inner ring 51 rotates with the rotation axis Ax1 as the center.

Each of "internal teeth" and "external teeth" stated in the embodiments of the invention refers to a set (group) of multiple "teeth" rather than a "tooth" as a single body. That is, the internal teeth 21 of the internally toothed gear 2 comprise a set of teeth arranged on the inner peripheral surface 221 of the internally toothed gear 2 (the gear body 22). Similarly, the external teeth 31 of the planetary gear 3 comprise a set of teeth arranged on an outer peripheral surface of the planetary gear 3.

### (3) Structure

A detailed structure of the internal-meshing planetary gear device 1 according to the embodiment is described below with reference to FIG. 1 to FIG. 8B.

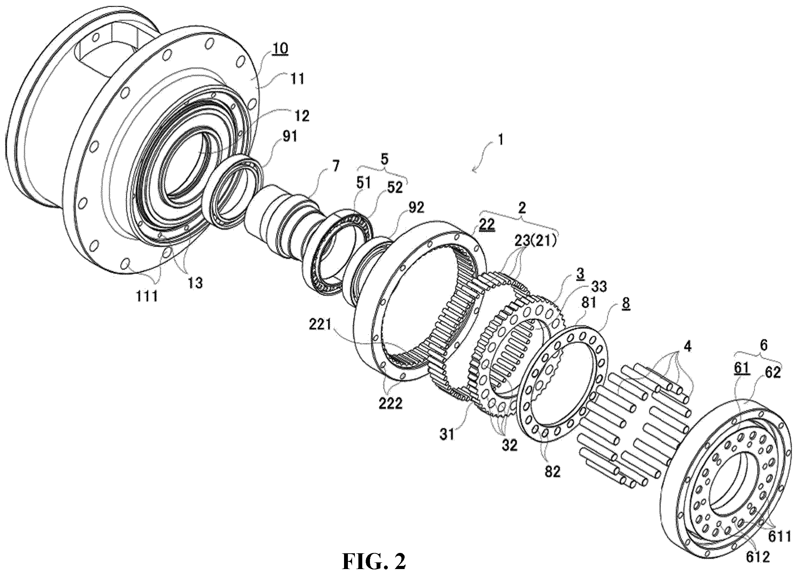

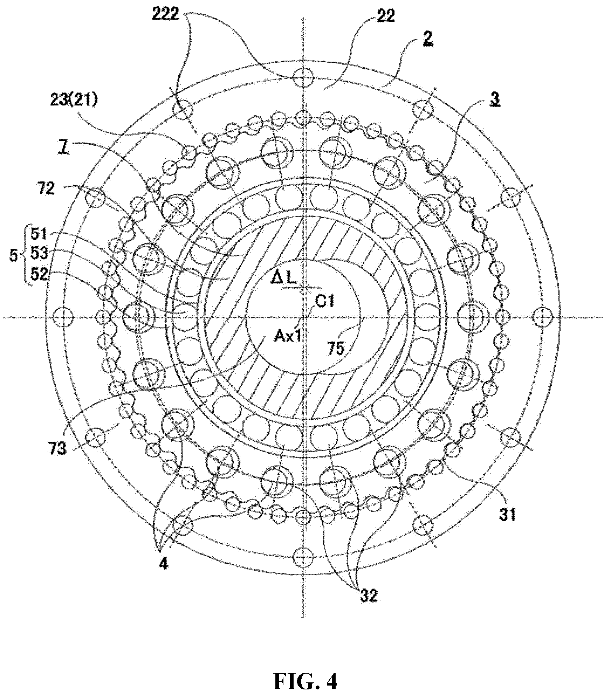

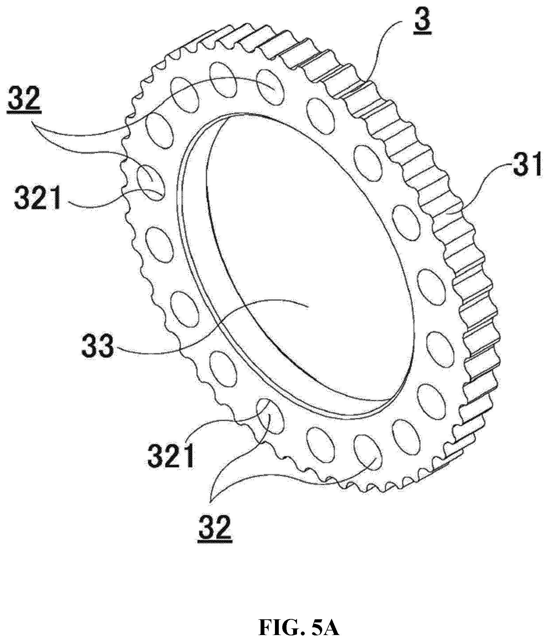

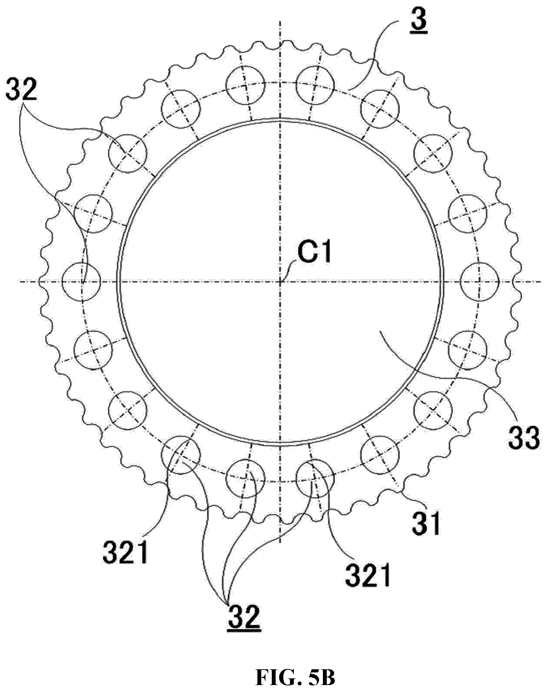

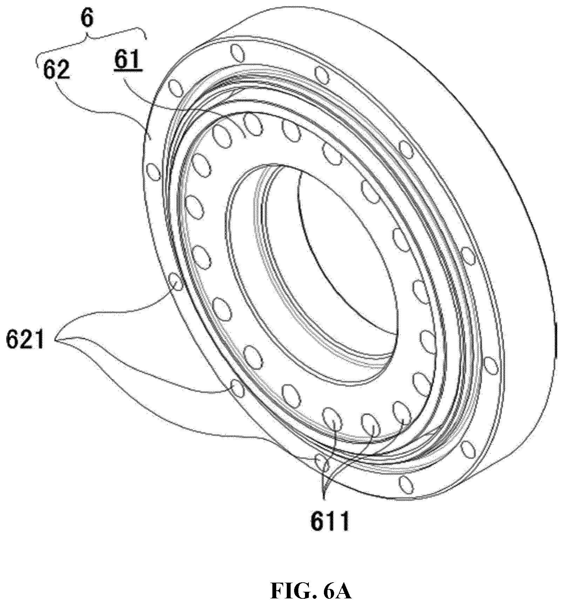

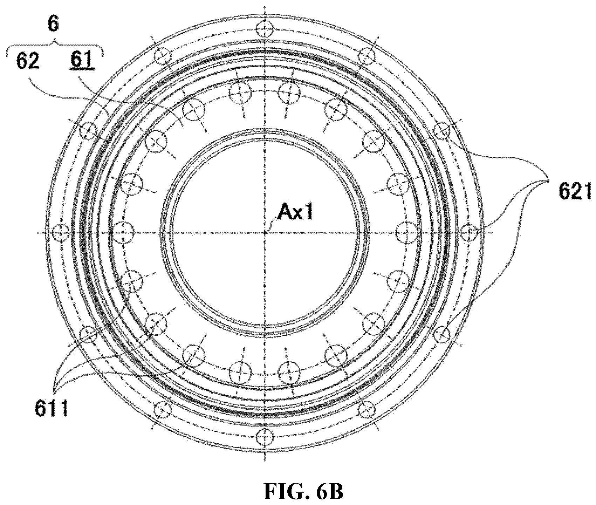

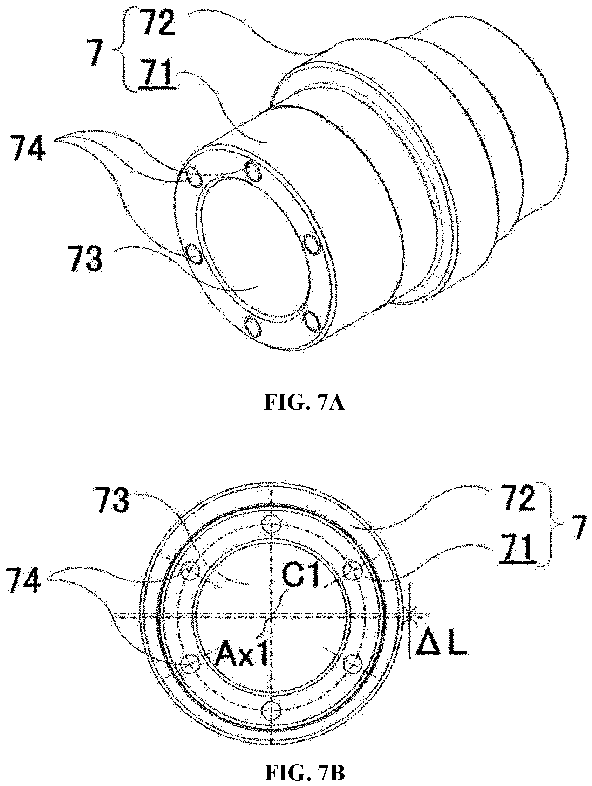

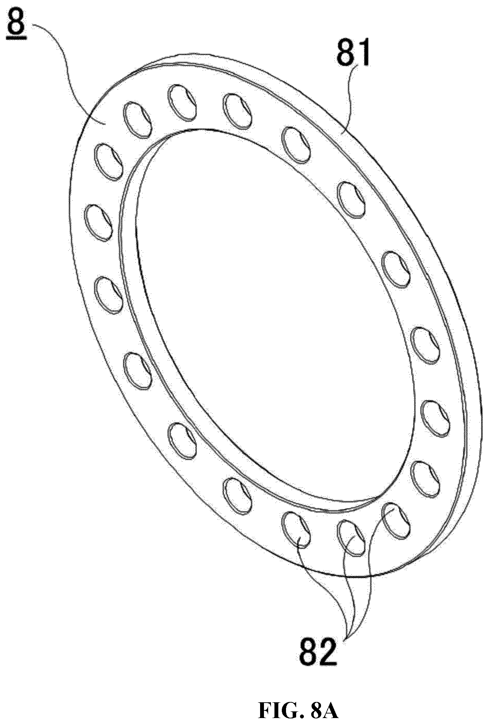

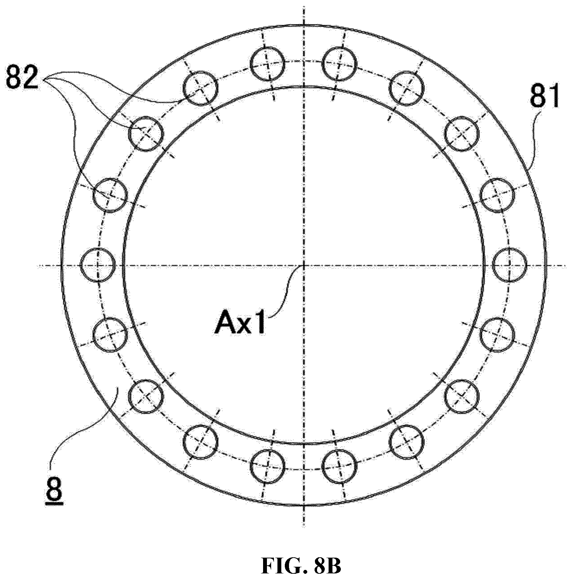

FIG. 1 is a perspective view showing a diagrammatic structure of the actuator 100 comprising the gear device 1. In FIG. 1, the driving source 101 is shown schematically. FIG. 2 is a diagrammatic exploded perspective view of the gear device 1 observed from an output side of the rotation axis Ax1. FIG. 3 is a diagrammatic cross-sectional view of the gear device 1. FIG. 4 is a cross-sectional view of a line A1-A1 of FIG. 3. Here, in FIG. 4, components other than the eccentric shaft 7 are shown in cross-section, but cross-sectional lines are omitted. Furthermore, in FIG. 4, an illustration of the inner peripheral surface 221 of the gear body 22 is omitted. FIG. 5A and FIG. 5B are a perspective view and a front view showing the planetary gear 3 by way of monomer respectively. FIG. 6A and FIG. 6B are a perspective view and a front view showing the bearing member 6 by way of monomer respectively. FIG. 7A and FIG. 7B are a perspective view and a front view showing the eccentric shaft 7 by way of monomer respectively. FIG. 8A and FIG. 8B are a perspective view and a front view showing the support body 8 by way of monomer respectively.

### (3.1) Overall Structure

As shown in FIG. 1 to FIG. 3, the gear device 1 of the embodiment comprises an internally toothed gear 2, a planetary gear 3, multiple inner pins 4, an eccentric body bearing 5, a bearing member 6, an eccentric shaft 7 and a support body 8. Furthermore, in the embodiment, the gear device 1 further comprises a first bearing 91, a second bearing 92 and a housing 10. In the embodiment, the internally toothed gear 2, the planetary gear 3, multiple inner pins 4, the eccentric body bearing 5, the bearing member 6, the eccentric shaft 7, the support body 8, or the like which are used as structural elements of the gear device 1, are made of metal materials such as stainless steel, cast iron, carbon steel for mechanical structure, chrome molybdenum steel, phosphor bronze, aluminum bronze, or the like. Metal as stated here comprises a metal which is subject to surface treatments such as nitridation treatment or the like.

Furthermore, in the embodiment, an internally tangential type planetary gear device using a cycloidal tooth shape is illustrated as an example of the gear device 1. That is, the gear device 1 of the embodiment comprises an internally tangential type planetary gear 3 with a curve tooth shape such as cycloid.

Furthermore, in the embodiment, as an example, the gear device 1 is used in a state where the gear body 22 of the internally toothed gear 2 and the outer ring 62 of the bearing member 6 are fixed together to a fixing member such as the housing 10 or the like. Therefore, the planetary gear 3 relatively rotates relative to the fixing member (the housing 10 or the like) along with relative rotation of the internally toothed gear 2 and the planetary gear 3.

Furthermore, in the embodiment, when the gear device 1 is used in the actuator 100, a rotation force as output is taken out from an output shaft integrated with the inner ring 61 of the bearing member 6 by applying a rotation force as input to the eccentric shaft 7. That is, the gear device 1 acts with rotation of the eccentric shaft 7 as input rotation and with rotation of the output shaft integrated with the inner ring 61 as output rotation. Therefore, in the gear device 1, output rotation which is decelerated at a relatively high reduction ratio with respect to input rotation may be obtained.

The driving source 101 is a power generation source such as an electric machine (motor) or the like. Power generated by the driving source 101 is transmitted to the eccentric shaft 7 in the gear device 1. Specifically, the driving source 101 is connected to the eccentric shaft 7 via an input shaft, and the power generated by the driving source 101 is transmitted to the eccentric shaft 7 via the input shaft. Therefore, the driving source 101 may rotate the eccentric shaft 7.

Furthermore, in the gear device 1 of the embodiment, as shown in FIG. 3, the rotation axis Ax1 on the input side and the rotation axis Ax1 on the output side are on the same line. In other words, the rotation axis Ax1 on the input side is coaxial to the rotation axis Ax1 on the output side. Here the rotation axis Ax1 on the input side is center of rotation of the eccentric shaft 7 to which input rotation is given, and the rotation axis Ax1 on the output side is center of rotation of the inner ring 61 (and the output shaft) for generating output rotation. That is, in the gear device 1, output rotation which is decelerated at a relatively high reduction ratio with respect to input rotation may be obtained on the same axis.

As shown in FIG. 4, the internally toothed gear 2 is an annular component having internal teeth 21. In the embodiment, the internally toothed gear 2 has a circular ring shape of which at least an inner peripheral surface is a perfect circle when it is observed in a top view. In the inner peripheral surface of the internally toothed gear 2 with the circular ring shape, the internal teeth 21 are formed along the circumferential direction of the internally toothed gear 2. Multiple teeth constituting the internal teeth 21 are all in the same shape, and are arranged at equal intervals in the whole area along the circumferential direction of the inner peripheral surface of the internally toothed gear 2. That is, a pitch circle of the internal tooth 21 is a perfect circle when it is observed in a top view. Center of the pitch circle of the internal tooth 21 is on the rotation axis Ax1. Furthermore, the internally toothed gear 2 has a predetermined thickness in a direction of the rotation axis Ax1. Tooth directions of the internal teeth 21 are all parallel to the rotation axis Ax1. Size in the tooth direction of the internal tooth 21 is slightly smaller than that in a thickness direction of the internally toothed gear 2.

Here, as described above, the internally toothed gear 2 has a gear body 22 with an annular shape (circular ring shape) and multiple pins 23. Multiple pins 23 are held on an inner peripheral surface 221 of the gear body 22 in a self-rotatable state, and constitute the internal teeth 21. In other words, multiple pins 23 function as multiple teeth constituting the internal teeth 21, respectively. Specifically, in the inner peripheral surface 221 of the gear body 22, multiple grooves are formed in the whole area along a circumferential direction as shown in FIG. 2. Multiple grooves are all in the same shape and are arranged at equal intervals. Multiple grooves are all parallel to the rotation axis Ax1 and are formed throughout the entire length along a thickness direction of the gear body 22. Multiple pins 23 are embedded into multiple grooves, to be combined in the gear body 22. Each of multiple pins 23 is held in a state of being self-rotatable within the groove. Furthermore, the gear body 22 (together with the outer ring 62) is fixed to the housing 10. Therefore, multiple fixing holes 222 for fixing are formed in the gear body 22.

As shown in FIG. 4, the planetary gear 3 is an annular component having external teeth 31. In the embodiment, the planetary gear 3 has a circular ring shape of which at least an outer peripheral surface is a perfect circle when it is observed in a top view. In the outer peripheral surface of the planetary gear 3 with the circular ring shape, the external teeth 31 are formed along a circumferential direction of the planetary gear 3. Multiple teeth constituting the external teeth 31 are all in the same shape, and are arranged at equal intervals in the whole area along a circumferential direction of the outer peripheral surface of the planetary gear 3. That is, a pitch circle of the external tooth 31 is a perfect circle when it is observed in a top view. Center C1 of the pitch circle of the external tooth 31 is at a position offset from the rotation axis Ax1 by a distance ΔL (referring to FIG. 4). Furthermore, the planetary gear 3 has a predetermined thickness in the direction of the rotation axis Ax1. The external teeth 31 are all formed throughout the entire length along a thickness direction of the planetary gear 3. Tooth directions of the external teeth 31 are all parallel to the rotation axis Ax1. In the planetary gear 3, unlike the internally toothed gear 2, the external teeth 31 and main body of the planetary gear 3 are integrally formed by a metal member.

Here the eccentric body bearing 5 and the eccentric shaft 7 are combined for the planetary gear 3. That is, an opened portion 33 in a form of a circular opening is formed in the planetary gear 3. The opened portion 33 is a hole penetrating the planetary gear 3 in a thickness direction. When it is observed in a top view, center of the opened portion 33 is consistent with center of the planetary gear 3, and an inner peripheral surface of the opened portion 33 (an inner peripheral surface of the planetary gear 3) and the pitch circle of the external tooth 31 are concentric circles. The eccentric body bearing 5 is received in the opened portion 33 of the planetary gear 3. Furthermore, the eccentric body bearing 5 and the eccentric shaft 7 are combined in the planetary gear 3 by inserting the eccentric shaft 7 into the eccentric body bearing 5 (the eccentric body inner ring 51 of the eccentric body bearing). In a state where the eccentric body bearing 5 and the eccentric shaft 7 are combined in the planetary gear 3, the planetary gear 3 swings around the rotation axis Ax1 when the eccentric shaft 7 rotates.

The planetary gear 3 as configured is arranged on the inner side of the internally toothed gear 2. When it is observed in a top view, the planetary gear 3 is formed smaller than the internally toothed gear 2, and the planetary gear 3 may swing on the inner side of the internally toothed gear 2 in a state where the planetary gear is combined with the internally toothed gear 2. Here the external teeth 31 are formed on the outer peripheral surface of the planetary gear 3, and the internal teeth 21 are formed on the inner peripheral surface of the internally toothed gear 2. Therefore, the external tooth 31 and the internal tooth 21 are opposite to each other, in a state where the planetary gear 3 is arranged on the inner side of the internally toothed gear 2.

Furthermore, the pitch circle of the external tooth 31 is smaller than the pitch circle of the internal tooth 21. Furthermore, in a state where the planetary gear 3 is internally tangential to the internally toothed gear 2, center C1 of the pitch circle of the external tooth 31 is at a position offset from center of the pitch circle of the internal tooth 21 (the rotation axis Ax1) by a distance ΔL (referring to FIG. 4). Therefore, at least a part of the external teeth 31 faces the internal teeth 21 with a gap there-between, there is no situation where all the external teeth and the internal teeth are meshed with each other in a circumferential direction. However, the planetary gear 3 swings (revolves) around the rotation axis Ax1 on the inner side of the internally toothed gear 2, so that the external teeth 31 are partially meshed with the internal teeth 21. That is, as shown in FIG. 4, a part of multiple teeth constituting the external teeth 31 are meshed with a part of multiple teeth constituting the internal teeth 21, by the planetary gear 3 swinging around the rotation axis Ax1. As a result, in the gear device 1, a part of the external teeth 31 may be meshed with a part of the internal teeth 21.

Here the tooth number of the internal teeth 21 in the internally toothed gear 2 is greater than the tooth number of the external teeth 31 of the planetary gear 3 by N (N is a positive integer). In the embodiment, as an example, N is "1", so that the tooth number (of the external teeth 31) of the planetary gear 3 is greater than the tooth number (of the internal teeth 21) of the internally toothed gear 2 by "1". In this way, a difference between the tooth number of the planetary gear 3 and the internally toothed gear 2 specifies a reduction ratio of output rotation relative to input rotation in the gear device 1.

Furthermore, in the embodiment, as an example, thickness of the planetary gear 3 is smaller than that of the gear body 22 in the internally toothed gear 2. Furthermore, size in a tooth direction (a direction parallel to the rotation axis Ax1) of the external tooth 31 is smaller than that in a tooth direction (a direction parallel to the rotation axis Ax1) of the internal tooth 21. In other words, in the direction parallel to the rotation axis Ax1, the external tooth 31 is received in a range of the tooth direction of the internal teeth 21.

In the embodiment, as described above, rotation of the planetary gear 3 corresponding to a self-rotation component is taken out, as rotation (output rotation) of an output shaft integrated with the inner ring 61 of the bearing member 6. Therefore, the planetary gear 3 is connected to the inner ring 61 by multiple inner pins 4. As shown in FIG. 5A and FIG. 5B, multiple inner pin holes 32 for inserting multiple inner pins 4 are formed in the planetary gear 3. The inner pin holes 32 are configured to have the same number as that of the inner pins 4. In the embodiment, as an example, the inner pin holes 32 and the inner pins 4 are configured to 18 inner pin holes and 18 inner pins respectively. Each of multiple inner pin holes 32 is a hole opened in a circular shape and penetrating the planetary gear 3 in a thickness direction. Multiple (here, 18) inner pin holes 32 are arranged at equal intervals along a circumferential direction on a virtual circle concentric with the opened portion 33.

Multiple inner pins 4 are components connecting the planetary gear 3 to the inner ring 61 of the bearing member 6. Each of multiple inner pins 4 is formed in a cylindrical shape. Diameters and lengths of multiple inner pins 4 are the same in multiple inner pins 4. The diameter of the inner pin 4 is smaller than that of the inner pin hole 32. Therefore, the inner pin 4 is inserted into the inner pin hole 32 in a state of ensuring a margin of space (gap) between the inner pin and the inner peripheral surface 321 of the inner pin hole 32 (referring to FIG. 4).

The bearing member 6 is a component having an outer ring 62 and an inner ring 61 and taking output of the gear device 1 out as rotation of the inner ring 61 relative to the outer ring 62. Besides the outer ring 62 and the inner ring 61, the bearing member 6 has multiple rolling bodies 63 (referring to FIG. 3).

As shown in FIG. 6A and FIG. 6B, each of the outer ring 62 and the inner ring 61 is an annular component. Each of the outer ring 62 and the inner ring 61 has a circular ring shape which is a perfect circle when it is observed in a top view. The inner ring 61 is smaller than the outer ring 62 and is arranged on the inner side of the outer ring 62. Here an inner diameter of the outer ring 62 is greater than an outer diameter of the inner ring 61, and thus a gap is generated between an inner peripheral surface of the outer ring 62 and an outer peripheral surface of the inner ring 61.

The inner ring 61 has multiple holding holes 611 into which multiple inner pins 4 are inserted respectively. The holding holes 611 are configured to have the same number as that of the inner pins 4. In the embodiment, as an example, the holding holes 611 are configured to 18 holding holes. As shown in FIG. 6A and FIG. 6B, each of multiple holding holes 611 is a hole opened in a circular shape and penetrating the inner ring 61 in a thickness direction. Multiple (here, 18) holding holes 611 are arranged at equal intervals along a circumferential direction on a virtual circle concentric with an outer periphery of the inner ring 61. Diameter of the holding hole 611 is greater than that of the inner pin 4 and smaller than that of the inner pin hole 32.

Furthermore, the inner ring 61 is integrated with the output shaft, and rotation of the inner ring 61 is taken out, as rotation of the output shaft. Therefore, multiple output-side mounting holes 612 (referring to FIG. 2) for mounting the output shaft are formed in the inner ring 61. In the embodiment, multiple output-side mounting holes 612 are arranged on a virtual circle which is at an inner side with respect to multiple holding holes 611 and concentric with the outer periphery of the inner ring 61.

The outer ring 62 and the gear body 22 of the internally toothed gear 2 are fixed together to a fixing member such as the housing 10 or the like. Therefore, multiple through-holes 621 for fixing are formed in the outer ring 62. Specifically, as shown in FIG. 3, the outer ring 62 is fixed to the housing 10 by fixing screws (bolts) 60 passing through the through-holes 621 and the fixing holes 222 of the gear body 22, in a state where the gear body 22 is sandwiched between the outer ring and the housing 10.

Multiple rolling bodies 63 are arranged in a gap between the outer ring 62 and the inner ring 61. Multiple rolling bodies 63 are arranged in parallel along a circumferential direction of the outer ring 62. Multiple rolling bodies 63 are all metal components with the same shape, and are arranged at equal intervals in the whole area along the circumferential direction of the outer ring 62.

In the embodiment, as an example, the bearing member 6 is a cross roller bearing. That is, the bearing member 6 has a cylindrical roller as the rolling body 63. Furthermore, an axis of the rolling body 63 with a cylindrical shape has an inclination of 45 degrees with respect to a plane orthogonal to the rotation axis Ax1, and is orthogonal to periphery of the inner ring 61. Furthermore, a pair of rolling bodies 63 adjacent to each other in a circumferential direction of the inner ring 61 is configured to be oriented orthogonal to each other axially. In such bearing member 6 comprising the cross roller bearing, a radial load, load in a thrust direction (in the direction of the rotation axis Ax1) and a bending force (bending moment load) for the rotation axis Ax1 are all easily born. Furthermore, these three loads may be tolerated by one bearing member 6, thereby ensuring required rigidity.

As shown in FIG. 7A and FIG. 7B, the eccentric shaft 7 is a cylindrical component. The eccentric shaft 7 has an axis portion 71 and an eccentric portion 72. The axis portion 71 has a cylindrical shape of which at least an outer peripheral surface is a perfect circle when it is observed in a top view. Center (central axis) of the axis portion 71 is consistent with the rotation axis Ax1. The eccentric portion 72 has a disc shape of which at least an outer peripheral surface is a perfect circle when it is observed in a top view. Center (central axis) of the eccentric portion 72 is consistent with the center C1 offset from the rotation axis Ax1. Here a distance ΔL between the rotation axis Ax1 and the center C1 (referring to FIG. 7B) becomes an eccentric amount of the eccentric portion 72 relative to the axis portion 71. The eccentric portion 72 has a flange shape protruding from an outer peripheral surface of the axis portion 71 at a central portion in a length direction (axial direction) of the axis portion 71, over the entire circumference. According to the above structure, as to the eccentric shaft 7, the eccentric part 72 is eccentrically moved by the axis portion 71 rotating (self-rotation) with the rotation axis Ax1 as the center.

In the embodiment, the axis portion 71 and the eccentric portion 72 are integrally formed by one metal member, so that a seamless eccentric shaft 7 is obtained. The eccentric shaft 7 with such a shape and the eccentric body bearing 5 is combined together in the planetary gear 3. Therefore, when the eccentric shaft 7 rotates in a state where the eccentric body bearing 5 and the eccentric shaft 7 are combined in the planetary gear 3, the planetary gear 3 swings around the rotation axis Ax 1.

Furthermore, the eccentric shaft 7 has a through-hole 73 penetrating the axis portion 71 in an axial direction (length direction). The through-hole 73 is opened in a circular shape on two end surfaces of the axis portion 71 in the axial direction. Center (central axis) of the through-hole 73 is consistent with the rotation axis Ax1. Cables such as a power line, a signal line, or the like may pass through the through-hole 73.

Furthermore, in the embodiment, a rotation force as input is applied from the driving source 101 to the eccentric shaft 7. Therefore, multiple input-side mounting holes 74 for mounting an input shaft connected to the driving source 101 are formed in the eccentric shaft 7 (referring to FIG. 7A and FIG. 7B). In the embodiment, multiple input-side mounting holes 74 are arranged around the through-hole 73 on one end surface of the axis portion 71 in the axial direction and are arranged on a virtual circle concentric with the through-hole 73.

The eccentric body bearing 5 is a component which has the eccentric body outer ring 52 and the eccentric body inner ring 51, absorbs a self-rotation component in rotation of the eccentric shaft 7 and transmits rotation of the eccentric shaft 7 other than the self-rotation component of the eccentric shaft 7, that is, only a swinging component (revolution component) of the eccentric shaft 7 to the planetary gear 3. Besides the eccentric body outer ring 52 and the eccentric body inner ring 51, the eccentric body bearing 5 further has multiple rolling bodies 53 (referring to FIG. 3).

Each of the eccentric body outer ring 52 and the eccentric body inner ring 51 is an annular component. Each of the eccentric body outer ring 52 and the eccentric body inner ring 51 has a circular ring shape which is a perfect circle when it is observed in a top view. The eccentric body inner ring 51 is smaller than the eccentric body outer ring 52 and is arranged on an inner side of the eccentric body outer ring 52. Here an inner diameter of the eccentric body outer ring 52 is greater than an outer diameter of the eccentric body inner ring 51, and thus a gap is generated between an inner peripheral surface of the eccentric body outer ring 52 and an outer peripheral surface of the eccentric body inner ring 51.

Multiple rolling bodies 53 are arranged in the gap between the eccentric body outer ring 52 and the eccentric body inner ring 51. Multiple rolling bodies 53 are arranged in parallel along a circumferential direction of the eccentric body outer ring 52. Multiple rolling bodies 53 are all metal components with the same shape, and are arranged at equal intervals in the whole area along the circumferential direction of the eccentric body outer ring 52. In the embodiment, as an example, the eccentric body bearing 5 comprises a deep groove ball bearing using balls as the rolling bodies 53.

Here an inner diameter of the eccentric body inner ring 51 is consistent with an outer diameter of the eccentric portion 72 of the eccentric shaft 7. The eccentric body bearing 5 is combined with the eccentric shaft 7 in a state where the eccentric portion 72 of the eccentric shaft 7 is inserted into the eccentric body inner ring 51. Furthermore, an outer diameter of the eccentric body outer ring 52 is consistent with an inner diameter (diameter) of the opened portion 33 of the planetary gear 3. The eccentric body bearing 5 is combined with the planetary gear 3 in a state where the eccentric body outer ring 52 is embedded in the opened portion 33 of the planetary gear 3. In other words, the eccentric body bearing 5 in a state of being assembled on the eccentric portion 72 of the eccentric shaft 7 is received in the opened portion 33 of the planetary gear 3.

Furthermore, in the embodiment, as an example, size of the eccentric body inner ring 51 of the eccentric body bearing 5 in a width direction (a direction parallel to the rotation axis Ax1) is substantially the same as thickness of the eccentric portion 72 of the eccentric shaft 7. Size of the eccentric body outer ring 52 in a width direction (a direction parallel to the rotation axis Ax1) is slightly smaller than the size of the eccentric body inner ring 51 in the width direction. Furthermore, the size of the eccentric body outer ring 52 in the width direction is greater than thickness of the planetary gear 3. Therefore, in the direction parallel to the rotation axis Ax1, the planetary gear 3 is received in a range of the eccentric body bearing 5. On the other hand, the size of the eccentric body outer ring 52 in the width direction is smaller than that in the tooth direction (a direction parallel to the rotation axis Ax1) of the internal tooth 21. Therefore, in the direction parallel to the rotation axis Ax1, the eccentric body bearing 5 is received in a range of the internally toothed gear 2.

When the eccentric shaft 7 rotates in a state where the eccentric body bearing 5 and the eccentric shaft 7 are combined in the planetary gear 3, the eccentric body inner ring 51 in the eccentric body bearing 5 rotates (eccentrically moves) around the rotation axis Ax1 offset from center C1 of the eccentric body inner ring 51. At this time, the self-rotation component of the eccentric shaft 7 is absorbed by the eccentric body bearing 5. Therefore, rotation of the eccentric shaft 7 other than the self-rotation component of the eccentric shaft 7, that is, only a swinging component (revolution component) of the eccentric shaft 7 is transmitted to the planetary gear 3 through the eccentric body bearing 5. Therefore, when the eccentric shaft 7 rotates in a state where the eccentric body bearing 5 and the eccentric shaft 7 are combined in the planetary gear 3, the planetary gear 3 swings around the rotation axis Ax1.

As shown in FIG. 8A and FIG. 8B, the support body 8 is a component formed in a ring shape and supporting multiple inner pins 4. The support body 8 has multiple support holes 82 into which multiple inner pins 4 are inserted respectively. The support holes 82 are configured to have the same number as that of the inner pins 4. In the embodiment, as an example, the support holes 82 are configured to 18 support holes. As shown in FIG. 8A and FIG. 8B, each of multiple support holes 82 is a hole opened in a circular shape and penetrating the support body 8 in a thickness direction. Multiple (here, 18) support holes 82 are arranged at equal intervals along a circumferential direction on a virtual circle concentric with an outer periphery surface 81 of the support body 8. Diameter of the support hole 82 is greater than that of the inner pin 4 and smaller than that of the inner pin hole 32. In the embodiment, as an example, the diameter of the support hole 82 is equal to that of the holding hole 611 formed in the inner ring 61.

As shown in FIG. 3, the support body 8 is arranged opposite to the planetary gear 3 from one side (input side) of the rotation axis Ax1. Furthermore, the support body 8 achieves a function of constraining multiple inner pins 4 by inserting multiple inner pins 4 into multiple support holes 82. Furthermore, position of the support body 8 is limited by contacting the outer peripheral surface 81 with multiple pins 23. Therefore, centering of the support body 8 is performed by multiple pins 23, as a result, centering of multiple inner pins 4 supported by the support body 8 is also performed by multiple pins 23. With respect to the support body 8, a detailed description is made thereto in a "(3.3) Support Body" column.

The first bearing 91 and the second bearing 92 are assembled on the axis portion 71 of the eccentric shaft 7 respectively. Specifically, as shown in FIG. 3, the first bearing 91 and the second bearing 92 are assembled on two sides of the eccentric portion 72 of the axis portion 71 in a manner of sandwiching the eccentric portion 72 there-between in a direction parallel to the rotation axis Ax1. As viewed from the eccentric portion 72, the first bearing 91 is arranged on an input side of the rotation axis Ax1. As viewed from the eccentric portion 72, the second bearing 92 is arranged on an output side of the rotation axis Ax1. The first bearing 91 holds the eccentric shaft 7 to be rotatable relative to the housing 10. The second bearing 92 holds the eccentric shaft 7 to be rotatable relative to the inner ring 61 of the bearing member 6. Therefore, the axis portion 71 of the eccentric shaft 7 is held to be rotatable at two sites on two sides of the eccentric portion 72 in the direction parallel to the rotation axis Ax1.

The housing 10 is cylindrical, and has a flange portion 11 at the output side of the rotation axis Ax1. The flange portion 11 is formed with multiple setting holes 111 for fixing the housing 10 itself. Furthermore, an end surface of the housing 10 at the output side of the rotation axis Ax1 is formed with a bearing hole 12. The bearing hole 12 is opened in a circular shape. The first bearing 91 is mounted to the housing 10 by embedding the first bearing 91 into the bearing bore 12.

Furthermore, the end surface of the housing 10 at the output side of the rotation axis Ax1 is formed with multiple threaded holes 13 around the bearing hole 12. Multiple threaded holes 13 are used to fix the gear body 22 of the internally toothed gear 2 and the outer ring 62 of the bearing member 6 to the housing 10. Specifically, the fixing screw 60 is screwed into the threaded hole 13 by passing through the through-hole 621 of the outer ring 62 and the fixing hole 222 of the gear body 22, thereby fixing the gear body 22 and the outer ring 62 to the housing 10.

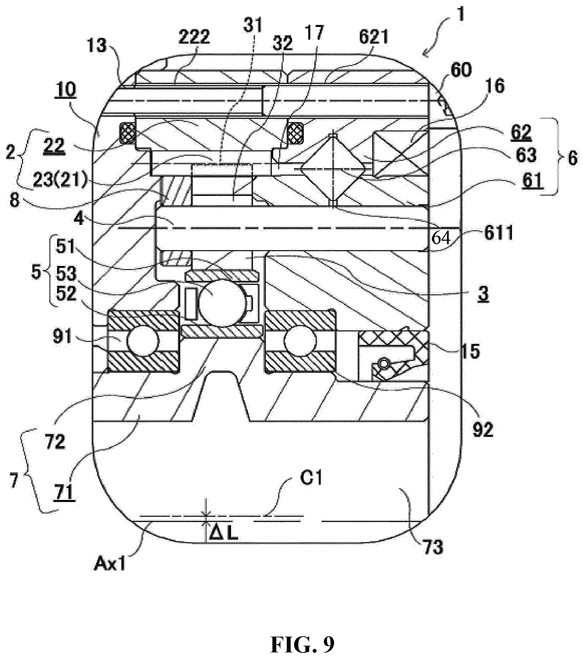

Furthermore, as shown in FIG. 3, the gear device 1 of the embodiment further comprises multiple oil seals 14, 15, 16, etc. The oil seal 14 is assembled to an end of the eccentric shaft 7 at the input side of the rotation axis Ax1, to fill a gap between the housing 10 and the eccentric shaft 7 (the axis portion 71). The oil seal 15 is assembled to an end of the eccentric shaft 7 at the output side of the rotation axis Ax1, to fill a gap between the inner ring 61 and the eccentric shaft 7 (the axis portion 71). The oil seal 16 is assembled to an end surface of the bearing member 6 at the output side of the rotation axis Ax1, to fill a gap between the inner ring 61 and the outer ring 62. A space enclosed by multiple oil seals 14, 15, 16 constitutes a lubricant holding space 17 (referring to FIG. 9). The lubricant holding space 17 comprises a space between the inner ring 61 and the outer ring 62 of the bearing member 6. Furthermore, multiple pins 23, a planetary gear 3, an eccentric body bearing 5, a support body 8, a first bearing 91, a second bearing 92, or the like are received in the lubricant holding space 17.

Furthermore, a lubricant is enclosed in the lubricant holding space 17. The lubricant is liquid and may flow in the lubricant holding space 17. Therefore, when the gear device 1 is used, the lubricant enters for example meshing portions of the internal teeth 21 comprising multiple pins 23 and the external teeth 31 of the planetary gear 3. "liquid" stated in the embodiments of the invention comprises a liquid or gel-like substance. "gel-like" as stated here refers to a state with an intermediate property of liquid and solid, comprising a state of a colloid comprising two phases, i.e., a liquid phase and a solid phase. For example, an emulsion where a dispersant is in a liquid phase and a dispersion substance is in a liquid phase, a suspension where a dispersion substance is in a solid phase, or the like, are referred to as a state of gel or sol which is comprised in "gel-like". Furthermore, a state where a dispersant is in a solid phase and a dispersion substance is in a liquid phase is also comprised in "gel-like". In the embodiment, as an example, the lubricant is a liquid lubrication oil (oil liquid).

In the gear device 1 with the above structure, a rotation force as input is applied to the eccentric shaft 7, and the eccentric shaft 7 rotates with the rotation axis Ax1 as the center, so that the planetary gear 3 swings (revolves) around the rotation axis Ax1. At this time, the planetary gear 3 is internally tangential to the internally toothed gear 2 on the inner side of the internally toothed gear 2, and swings in a state of a part of the external teeth 31 meshing with a part of the internal teeth 21, so that a meshing position of the internal tooth 21 and the external tooth 31 moves in a circumferential direction of the internally toothed gear 2. Therefore, relative rotation corresponding to a difference between the tooth number of the planetary gear 3 and the internally toothed gear 2 is generated between the two gears (the internally toothed gear 2 and the planetary gear 3). Furthermore, rotation (self-rotation component) of the planetary gear 3, except the swinging component (revolution component) of the planetary gear 3, is transmitted to the inner ring 61 of the bearing member 6 through multiple inner pins 4. As a result, a rotational output which is decelerated at a relatively high reduction ratio corresponding to the difference between the tooth number of the two gears may be obtained from an output shaft integrated with the inner ring 61.

However, in the gear device 1 of the embodiment, as described above, the difference between the tooth number of the internally toothed gear 2 and the planetary gear 3 specifies a reduction ratio of output rotation with respect to input rotation in the gear device 1. That is, in case that the tooth number of the internally toothed gear 2 is set to "V1" and the tooth number of the planetary gear 3 is set to "V2", a reduction ratio R1 is represented by Formula 1 below.$R 1 = V 2 / \left(V1-V2\right)$ (Formula 1)

In summary, the smaller the difference (V1-V2) between the tooth number of the internally toothed gear 2 and the planetary gear 3, the larger the reduction ratio R1. As an example, the tooth number V1 of the internally toothed gear 2 is "52", the tooth number V2 of the planetary gear 3 is "51", and the difference (V1-V2) between the tooth number thereof is "1", and thus the reduction ratio R1 is "51" according to the above Formula 1. In this case, when it is observed from the input side of the rotation axis Ax1, the eccentric shaft 7 rotates clockwise by a circle (360 degrees) with the rotation axis Ax1 as the center, then the inner ring 61 rotates counterclockwise by an amount equal to the difference "1" between the tooth number (i.e., about 7.06 degrees) with the rotation axis Ax1 as the center.

According to the gear device 1 of the embodiment, such high reduction ratio R1 may be achieved by a combination of primary gears (the internally toothed gear 2 and the planetary gear 3).

Furthermore, it is feasible as long as the gear device 1 comprises at least the internally toothed gear 2, the planetary gear 3, multiple inner pins 4, the bearing member 6 and the support body 8, the gear device 1 may further comprise for example a spline, bushing or the like as structural elements.

However, in case that input rotation of the high-speed rotation side such as the gear device 1 of the embodiment is accompanied by eccentric motion, when weight balance of rotation bodies rotating at a high speed is not obtained, vibration or the like may occur, and thus, sometimes a balance weight or the like is used to obtain weight balance. That is, a rotation body comprising at least one of the eccentric body inner ring 51 or a member (the eccentric shaft 7) rotating together with the eccentric body inner ring 51 performs eccentric motion at a high speed, and thus it is preferable to obtain weight balance of the rotation body with respect to the rotation axis Ax1. In the embodiment, as shown in FIG. 3 and FIG. 4, weight balance of the rotation body with respect to the rotation axis Ax1 is obtained by providing a void 75 in a part of the eccentric portion 72 of the eccentric shaft 7.

In summary, in the embodiment, weight balance of the rotation body with respect to the rotation axis Ax1 is obtained by lightweight based on thinning a part of the rotation body (here, the eccentric shaft 7) without adding a balance weight or the like. That is, the gear device 1 of the embodiment comprises the eccentric body bearing 5 which is received in the opened portion 33 formed in the planetary gear 3 and allows the planetary gear 3 to swing. The eccentric body bearing 5 has an eccentric body outer ring 52 and an eccentric body inner ring 51 arranged on an inner side of the eccentric body outer ring 52. When a rotation body comprising at least one of the eccentric body inner ring 51 or a member rotating together with the eccentric body inner ring 51 is observed along the rotation axis Ax1 of the eccentric body inner ring 51, a part of the rotation body on a side of a center C1 of the eccentric body outer ring 52 comprises a void 75. In the embodiment, the eccentric shaft 7 is "a component rotating together with the eccentric body inner ring 51", which is equivalent to a "rotation body". Therefore, the void 75 formed in the eccentric portion 72 of the eccentric shaft 7 is equivalent to a void 75 of the rotation body. As shown in FIG. 3 and FIG. 4, the void 75 is located at a position on the side of the center C1 when it is observed along the rotation axis Ax1, and thus achieves a function of obtaining an almost equal weight balance of the eccentric shaft 7 from the rotation axis Ax1 to the circumferential direction.

More specifically, the void 75 comprises a recess formed in an inner peripheral surface of a through-hole 73 penetrating the rotation body along the rotation axis Ax1 of the eccentric body inner ring 51. That is, in the embodiment, the rotation body is the eccentric shaft 7, so that the recess formed on the inner peripheral surface of the through-hole 73 penetrating the eccentric shaft 7 along the rotation axis Ax1 functions as the void 75. In this way, weight balance of the rotation body may be obtained without changing its appearance, by using the recess formed on the inner peripheral surface of the through-hole 73 as the void 75.

### (3.2) Self-rotation Structure of Inner Pin

Next, a self-rotation structure of the inner pin 4 of the gear device 1 according to the embodiment is described in more detail with reference to FIG. 9. FIG. 9 is an enlarged view of a region Z1 of FIG. 3.

Firstly, as a prerequisite, multiple inner pins 4 are components connecting the planetary gear 3 to the inner ring 61 of the bearing member 6, as described above. Specifically, one end portion of the inner pin 4 in a length direction (in the embodiment, an end portion at the input side of the rotation axis Ax1) is inserted into the inner pin hole 32 of the planetary gear 3, and the other end portion of the inner pin 4 in the length direction (in the embodiment, an end portion at the output side of the rotation axis Ax1) is inserted into the holding hole 611 of the inner ring 61.

Here diameter of the inner pin 4 is smaller than that of the inner pin hole 32, so that a gap may be ensured between the inner pin 4 and the inner peripheral surface 321 of the inner pin hole 32, and the inner pin 4 may move in the inner pin hole 32, that is, the inner pin 4 may relatively move relative to center of the inner pin hole 32. On the other hand, although diameter of the holding hole 611 is greater than that of the inner pin 4, diameter of the holding hole 611 is smaller than that of the inner pin hole 32. In the embodiment, diameter of the holding hole 611 is approximately the same as that of the inner pin 4, and is slightly greater than that of the inner pin 4. Therefore, movement of the inner pin 4 in the holding hole 611 is limited, that is, relative movement of the inner pin 4 relative to center of the holding hole 611 is inhibited. Therefore, the inner pin 4 is held in the planetary gear 3 in a state where it is able to revolve in the inner pin hole 32 and is held in a state where it is unable to revolve in the holding hole 611 relative to the inner ring 61. Therefore, the swinging component of the planetary gear 3, i.e., the revolution component of the planetary gear 3, is absorbed by play-embedding of the inner pin hole 32 to the inner pin 4, and rotation (self-rotation component) of the planetary gear 3, except the swinging component (revolution component) of the planetary gear 3, is transmitted to the inner ring 61 through multiple inner pins 4.

However, in the embodiment, diameter of the inner pin 4 is slightly greater than that of the holding hole 611, therefore in a state where the inner pin 4 is inserted into the holding hole 611, the inner pin 4 may self-rotate in the holding hole 611 although revolution of the inner pin 4 in the holding hole 611 is inhibited. That is, although the inner pin 4 is in a state of being inserted into the holding hole 611, the inner pin 4 is not pressed into the holding hole 611, and thus the inner pin 4 may self-rotate in the holding hole 611. In this way, in the gear device 1 of the embodiment, each of multiple inner pins 4 is held by the inner ring 61 in a self-rotatable state, and thus when the inner pin 4 revolves in the inner pin hole 32, the inner pin 4 itself may self-rotate.

In summary, in the embodiment, the inner pin 4 is held in a state of self-rotation and revolving in the inner pin hole 32 relative to the planetary gear 3, and is held in a state of only self-rotation in the holding hole 611 relative to the inner ring 61. That is, multiple inner pins 4 may rotate (revolve) with the rotation axis Ax1 as the center and may revolve in multiple inner pin holes 32 in a state where self-rotation of multiple inner pins 4 are not constrained (in a self-rotatable state). Therefore, when rotation (self-rotation component) of the planetary gear 3 is transmitted to the inner ring 61 by multiple inner pins 4, the inner pin 4 may revolve and self-rotate in the inner pin hole 32, while self-rotate in the holding hole 611. Therefore, when the inner pin 4 revolves in the inner pin hole 32, the inner pin 4 is in a self-rotatable state, so that the inner pin 4 rolls relative to the inner peripheral surface 321 of the inner pin hole 32. In other words, the inner pin 4 revolves in the inner pin hole 32 in a manner of rolling on the inner peripheral surface 321 of the inner pin hole 32, so that it is difficult to generate loss caused by a frictional resistance between the inner peripheral surface 321 of the inner pin hole 32 and the inner pin 4.

In this way, in the structure of the embodiment, since it is originally difficult to generate loss caused by a frictional resistance between the inner peripheral surface 321 of the inner pin hole 32 and the inner pin 4, inner rollers may be omitted. Therefore, in the embodiment, each of multiple inner pins 4 adopts a structure in direct contact with the inner peripheral surface 321 of the inner pin hole 32. That is, in the embodiment, the inner pin 4 in a state of not equipping inner rollers is inserted into the inner pin hole 32, and the inner pin 4 is in direct contact with the inner peripheral surface 321 of the inner pin hole 32. Therefore, inner rollers may be omitted, and diameter of the inner pin hole 32 may be suppressed to be small, so that the planetary gear 3 may be miniaturized (especially with a small diameter), and the whole gear device 1 is also easy to be miniaturized. When size of the planetary gear 3 is fixed, compared with the first related art for example, the number (amount) of inner pins 4 may also be increased to smooth transmission of the rotation, or the inner pin 4 becomes thicker to improve strength. Furthermore, the number of components may be suppressed to reduce the amount corresponding to inner rollers, thereby contributing to low cost of the gear device 1.

Furthermore, in the gear device 1 of the embodiment, at least a part of each of multiple inner pins 4 is arranged at the same position as the bearing member 6 in an axial direction of the bearing member 6. That is, as shown in FIG. 9, at least a part of the inner pin 4 is arranged at the same position as the bearing member 6 in a direction parallel to the rotation axis Ax1. In other words, at least a part of the inner pin 4 is located between two end surfaces of the bearing member 6 in the direction parallel to the rotation axis Ax1. Furthermore, in other words, at least a part of each of multiple inner pins 4 is arranged on the inner side of the outer ring 62 of the bearing member 6. In the embodiment, an end portion of the inner pin 4 at the output side of the rotation axis Ax1 is at the same position as the bearing member 6 in the direction parallel to the rotation axis Ax1. In summary, the end portion of the inner pin 4 at the output side of the rotation axis Ax1 is inserted into the holding hole 611 formed in the inner ring 61 of the bearing member 6, so that at least the end portion is arranged at the same position as the bearing member 6 in the axial direction of the bearing member 6.

In this way, at least a part of each of multiple inner pins 4 is arranged at the same position as the bearing member 6 in the axial direction of the bearing member 6, so that size of the gear device 1 in the direction parallel to the rotation axis Ax1 may be suppressed to be small. That is, compared with a structure where the bearing member 6 is in parallel with (opposite to) the inner pin 4 along the axial direction of the bearing member 6, in the gear device 1 of the embodiment, size of the gear device 1 in the direction parallel to the rotation axis Ax1 may be reduced, thereby contributing to further miniaturization (thinning) of the gear device 1.

Here an opened surface of the holding hole 611 at the output side of the rotation axis Ax1 is closed for example by an output shaft integrated with the inner ring 61 or the like. As a result, movement of the inner pin 4 toward the output side of the rotation axis Ax1 (right side of FIG. 9) is limited by the output shaft integrated with the inner ring 61 or the like.

Furthermore, in the embodiment, in order for the inner pin 4 to self-rotate relative to the inner ring 61 smoothly, the following structure is used. That is, a lubricant (lubrication oil) is interposed between an inner peripheral surface of the holding hole 611 formed in the inner ring 61 and the inner pin 4, so that self-rotation of the inner pin 4 is smooth. Especially in the embodiment, there is a lubricant holding space 17 for injecting the lubricant between the inner ring 61 and the outer ring 62, so that the lubricant in the lubricant holding space 17 is used to achieve smooth self-rotation of the inner pin 4.

In the embodiment, as shown in FIG. 9, the inner ring 61 has multiple holding holes 611 into which multiple inner pins 4 are inserted respectively, and multiple link paths 64. Multiple link paths 64 connect the lubricant holding space 17 between the inner ring 61 and the outer ring 62 to multiple holding holes 611. Specifically, the inner ring 61 is formed with the link path 64 extending radially from a part of the inner peripheral surface of the holding hole 611, that is, a part corresponding to the rolling body 63. The link path 64 is a hole penetrating between a bottom surface of a recess (groove) receiving the rolling body 63 in an opposite surface of the inner ring 61 opposite to the outer ring 62 and the inner peripheral surface of the holding hole 611. In other words, an opened surface of the link path 64 on the lubricant holding space 17 side is arranged at a position facing (opposite to) the rolling body 63 of the bearing member 6. The lubricant holding space 17 and the holding hole 611 are spatially connected via such link path 64.

According to the above structure, since the lubricant holding space 17 is connected to the holding hole 611 by the link path 64, the lubricant in the lubricant holding space 17 is supplied to the holding hole 611 through the link path 64. That is, the rolling body 63 functions as a pump when the bearing member 6 operates and the rolling body 63 rotates, to supply the lubricant in the lubricant holding space 17 to the holding hole 611 through the link path 64. In particular, the opened surface of the link path 64 on the lubricant holding space 17 side is at the position facing (opposite to) the rolling body 63 of the bearing member 6, therefore the rolling body 63 effectively functions as a pump when the rolling body 63 rotates. As a result, the lubricant is interposed between the inner peripheral surface of the holding hole 611 and the inner pin 4, which may achieve smooth self-rotation of the inner pin 4 relative to the inner ring 61.

### (3.3) Support Body

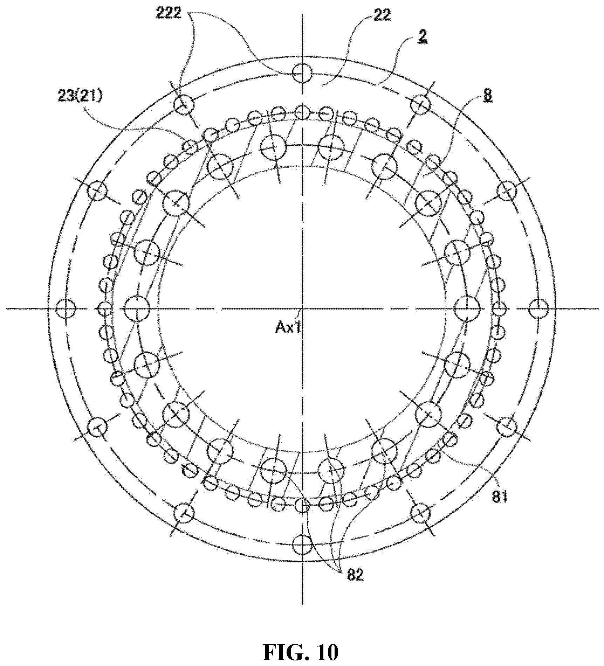

Next, a structure of the support body 8 of the gear device 1 according to the invention is described in more detail with reference to FIG. 10. FIG. 10 is a cross-sectional view of a line B1-B1 of FIG. 3. However, in FIG. 10, cross-sectional lines are omitted with respect to components other than the support body 8, even though they are shown in cross-section. Furthermore, in FIG. 10, only the internally toothed gear 2 and the support body 8 are shown, and illustration of other components (inner pins 4, or the like) are omitted. Furthermore, in FIG. 10, illustration of the inner peripheral surface 221 of the gear body 22 is omitted.

Firstly, as a prerequisite, the support body 8 is a component supporting multiple inner pins 4, as described above. That is, the support body 8 disperses load acting on multiple inner pins 4 when rotation (self-rotation component) of the planetary gear 3 is transmitted to the inner ring 61, by constraining multiple inner pins 4. Specifically, there are multiple support holes 82 into which multiple inner pins 4 are inserted respectively. In the embodiment, as an example, diameter of the support hole 82 is equal to that of the holding hole 611 formed in the inner ring 61. Therefore, the support body 8 supports multiple inner pins 4 in a state where each of multiple inner pins 4 is self-rotatable. That is, each of multiple inner pins 4 is held in a state where it is self-rotatable relative to the support body 8 and the inner ring 61 of the bearing member 6.

In this way, the support body 8 performs positioning of multiple inner pins 4 relative to the support body 8 in both circumferential and radial directions. That is, movement of the inner pin 4 is limited with respect to all directions in a plane orthogonal to the rotation axis Ax1 by inserting into the support hole 82 of the support body 8. Therefore, the inner pin 4 is positioned not only in the circumferential direction but also in the radial direction (radially) by the support body 8.

According to the invention the support body 8 has a circular ring shape of which at least the outer peripheral surface 81 is a perfect circle when it is observed in a top view. Furthermore, position of the support body 8 is limited by contacting the outer peripheral surface 81 with multiple pins 23 in the internally toothed gear 2. In other words, since multiple pins 23 constitute the internal teeth 21 of the internally toothed gear 2, position of the support body 8 is limited by contacting the outer peripheral surface 81 with the internal teeth 21. Here diameter of the outer peripheral surface 81 of the support body 8 is the same as that of a virtual circle (addendum circle) passing through a front end of the internal tooth 21 of the internally toothed gear 2. Therefore, multiple pins 23 are all in contact with the outer peripheral surface 81 of the support body 8. Therefore, in a state where position of the support body 8 is limited by multiple pins 23, position of center of the support body 8 is limited in a manner that it overlaps with center of the internally toothed gear 2 (the rotation axis Ax1). Therefore, centering of the support body 8 is achieved, and as a result, centering of multiple inner pins 4 supported by the support body 8 is also achieved by multiple pins 23.

Furthermore, multiple inner pins 4 rotate (revolve) with the rotation axis Ax1 as the center, thereby transmitting rotation (self-rotation component) of the planetary gear 3 to the inner ring 61. Therefore, the support body 8 supporting multiple inner pins 4 rotates with the rotation axis Ax1 as the center, together with multiple inner pins 4 and the inner ring 61. At this time, centering of the support body 8 is achieved by multiple pins 23, so that the support body 8 rotates smoothly in a state where center of the support body 8 is maintained on the rotation axis Ax1. Furthermore, the support body 8 rotates in a state where the outer peripheral surface 81 thereof is in contact with multiple pins 23, so that each of multiple pins 23 rotates (self-rotates) along with rotation of the support body 8. Therefore, the support body 8 and the internally toothed gear 2 together constitute a needle bearing (acicular roller bearing) and rotate smoothly.

That is, the outer peripheral surface 81 of the support body 8 relatively rotates relative to the gear body 22 together with multiple inner pins 4, in a state where it is tangential to multiple pins 23. Therefore, when the gear body 22 of the internally toothed gear 2 is considered as an "outer ring", the support body 8 is considered as an "inner ring", then multiple pins 23 between the gear body and the support body function as "rolling bodies (rollers)". In this way, the support body 8 and the internal toothed gear 2 (the gear body 22 and multiple pins 23) together constitute a needle bearing, and may rotate smoothly.

Furthermore, since multiple pins 23 are sandwiched between the support body 8 and the gear body 22, the support body 8 also functions as a "limiter" which suppresses movement of the pin 23 in a direction of separation from the inner peripheral surface 221 of the gear body 22. That is, multiple pins 23 are sandwiched between the outer peripheral surface 81 of the support body 8 and the inner peripheral surface 221 of the gear body 22, thereby suppressing floating of multiple pins 23 from the inner peripheral surface 221 of the gear body 22. In summary, in the embodiment, movement of each of multiple pins 23 in a direction of separation from the gear body 22 is limited by contacting each of multiple pins with the outer peripheral surface 81 of the support body 8.

However, in the embodiment, as shown in FIG. 9, the support body 8 is located on an opposite side of the inner ring 61 of the bearing member 6 across the planetary gear 3. That is, the support body 8, the planetary gear 3 and the inner ring 61 are arranged in parallel in the direction parallel to the rotation axis Ax1. In the embodiment, as an example, the support body 8 is located on the input side of the rotation axis Ax1 when it is observed from the planetary gear 3, and the inner ring 61 is located on the output side of the rotation axis Ax1 when it is observed from the planetary gear 3. Furthermore, the support body 8 and the inner ring 61 together support two end portions of the inner pin 4 in a length direction (the direction parallel to the rotation axis Ax1), and a center portion of the inner pin 4 in the length direction is inserted into the inner pin hole 32 of the planetary gear 3 by penetrating it. In summary, the gear device 1 of the embodiment comprises a bearing member 6, the bearing member 6 has an outer ring 62 and an inner ring 61, the inner ring 61 is arranged on an inner side of the outer ring 62 and is supported to be relatively rotatable relative to the outer ring 62. Furthermore, the gear body 22 is fixed to the outer ring 62. Here the planetary gear 3 is located between the support body 8 and the inner ring 61 in an axial direction of the support body 8.

According to this structure, the support body 8 and the inner ring 61 support two end portions of the inner pin 4 in the length direction, so that it is difficult to generate inclination of the inner pin 4. In particular, it is also easy to bear a bending force (bending moment load) for the rotation axis Ax1 acting on multiple inner pins 4. Furthermore, in the embodiment, the support body 8 is sandwiched between the planetary gear 3 and the housing 10 in the direction parallel to the rotation axis Ax1. Therefore, movement of the support body 8 toward the input side of the rotation axis Ax1 (left side of FIG. 9) is limited by the housing 10. Movement of the inner pin 4 protruding from the support body 8 to the input side of the rotation axis Ax1 by penetrating the support hole 82 of the support body 8, toward the input side (left side of FIG. 9) of the rotation axis Ax1 is also limited by the housing 10.

According to the invention, the support body 8 and the inner ring 61 are also in contact with two end portions of multiple pins 23. That is, as shown in FIG. 9, the support body 8 is in contact with one end portion (an end portion at the input side of the rotation axis Ax1) of the pin 23 in a length direction (a direction parallel to the rotation axis Ax1). The inner ring 61 is in contact with the other end portion (an end portion at the output side of the rotation axis Ax1) of the pin 23 in the length direction (a direction parallel to the rotation axis Ax1). According to this structure, centering of the support body 8 and the inner ring 61 are achieved at two end portions of the pin 23 in the length direction, so that it is difficult to generate inclination of the inner pin 4. In particular, it is also easy to bear the bending force (bending moment load) for the rotation axis Ax1 acting on multiple inner pins 4.

Furthermore, lengths of multiple pins 23 are greater than thickness of the support body 8. In other words, in the direction parallel to the rotation axis Ax1, the support body 8 is received in a range of the tooth direction of the internal teeth 21. Therefore, the outer peripheral surface 81 of the support body 8 is in contact with multiple pins 23 throughout the entire length in the tooth direction (a direction parallel to the rotation axis Ax1) of the internal teeth 21. Therefore, it is difficult to generate a bad condition such as "unilateral wear", that is, the outer peripheral surface 81 of the support body 8 is partially worn.

Furthermore, in the embodiment, surface roughness of the outer peripheral surface 81 of the support body 8 is smaller than that of a surface of the support body 8 adjacent to the outer peripheral surface 81. That is, surface roughness of the outer peripheral surface 81 is smaller than that of two end surfaces of the support body 8 in an axial direction (thickness direction). "surface roughness" stated in the embodiments of the invention refers to roughness of a surface of an object, the smaller a value thereof, the smaller (the less) a concave-convex degree of the surface, the smoother the surface. In the embodiment, as an example, surface roughness is set to an arithmetic mean roughness (Ra). For example, by grinding or other processes, surface roughness of the outer peripheral surface 81 is smaller than that of surfaces other than the outer peripheral surface 81 of the support body 8. In this structure, rotation of the support body 8 becomes smoother.

Furthermore, in the embodiment, hardness of the outer peripheral surface 81 of the support body 8 is lower than that of a circumferential surface of each of multiple pins 23 and is higher than that of the inner peripheral surface 221 of the gear body 22. "hardness" stated in the embodiments of the invention refers to a hard degree of an object, and hardness of a metal is represented for example by size of an indentation formed by pushing and pressing a steel ball at a certain pressure. Specifically, as an example of hardness of the metal, there are Rockwell hardness (HRC), Brinell hardness (HB), Vickers hardness (HV), or Shore hardness (HS), or the like. As a means of increasing hardness (hardening) of a metal part, there are for example alloying, or heat treatment, or the like. In the embodiment, as an example, hardness of the outer peripheral surface 81 of the support body 8 is increased by carburizing and quenching, or other processes. In this structure, even though the support body 8 rotates, it is difficult to generate wear powder or the like, so that smooth rotation of the support body 8 is easily maintained for a long period of time.

### (4) Invention Example

Next, an invention example of the gear device 1 and the actuator 100 of the embodiments is described.

The gear device 1 and the actuator 100 of the embodiments are applicable to for example a horizontal multi-joint robot, i.e., a robot such as so-called Selective Compliance Assembly Robot Arm (SCARA) type robot.

Furthermore, the invention example of the gear device 1 and the actuator 100 of the embodiments is not limited to the above horizontal multi-joint robot, for example, may also be applicable to industrial robots other than the horizontal multi-joint robot, or robots other than industrial robots, or the like. As an example, in industrial robots other than the horizontal multi-joint robot, there is a vertical multi-joint robot, or a parallel link-type robot, or the like. As an example, in robots other than industrial robots, there is a home robot, a nursing robot, or a medical robot, or the like.

### (5) Deformation Example

The above embodiment is merely one of various implementations of the embodiments of the invention. As long as the above embodiment may achieve the purpose of the embodiments of the application, various changes may be made thereto according to the appended claims. Furthermore, drawings referred by the embodiments of the invention are schematic diagrams, and respective ratios of sizes and thicknesses of structural elements in the drawings do not necessarily reflect actual size ratios. Deformation examples of the above embodiment are listed below. The deformation examples described below may be applicable with proper combination.

In the above embodiment, a type of gear device 1 with one planetary gear 3 is exemplified, however, the gear device 1 may comprise multiple planetary gears 3. For example, in case that the gear device 1 comprises two planetary gears 3, the two planetary gears 3 are preferably arranged at a phase difference of 180 degrees about the rotation axis Ax1. Furthermore, in case that the gear device 1 comprises three planetary gears 3, the three planetary gears 3 are preferably arranged at a phase difference of 120 degrees about the rotation axis Ax1. In this way, weight balance between multiple planetary gears 3 may be obtained in case that multiple planetary gears 3 are equally arranged in a circumferential direction with the rotation axis Ax1 as the center.

Furthermore, at least a part of each of multiple inner pins 4 is arranged at the same position as the bearing member 6 in the axial direction of the bearing member 6, which is not a structure necessarily provided in the gear device 1. That is, it is feasible as long as the gear device 1 comprises the bearing member 6, the internally toothed gear 2, the planetary gear 3, and multiple inner pins 4. The bearing member 6 has an outer ring 62, and an inner ring 61 arranged on an inner side of the outer ring 62. The inner ring 61 is supported to be relatively rotatable relative to the outer ring 62. The gear body 22 of the internally toothed gear 2 is fixed to the outer ring 62. Each of multiple inner pins 4 is held in the inner ring 61 in a self-rotatable state. Here each of multiple inner pins 4 may be arranged in parallel with (opposite to) the bearing member 6 in the axial direction of the bearing member 6.

Furthermore, the number of inner pins 4, the number of pins 23 (the tooth number of internal teeth 21), the tooth number of external teeth 31, or the like described in the above embodiments are merely one example, and may be appropriately changed.

Furthermore, the bearing member 6 is not limited to a cross roller bearing, and may be a deep groove ball bearing, or an angular contact ball bearing, or the like. However, the bearing member 6 is preferably for example a four-point contact ball bearing or the like, so that a radial load, load in a thrust direction (in the direction of the rotation axis Ax1) and a bending force (bending moment load) for the rotation axis Ax1 may be all born.

Furthermore, the eccentric body bearing 5 is not limited to a deep groove ball bearing, for example, it may be an angular contact ball bearing or the like. Furthermore, the eccentric body bearing 5 is not limited to a ball bearing, for example, it may be a roller bearing such as a cylindrical roller bearing, a needle roller bearing, or a conical roller bearing, or the like in which the rolling body 53 comprises a non-spherical "roller".

Furthermore, materials of structural elements of the gear device 1 are not limited to metal, for example, they may be resins such as an engineering plastic or the like.

Furthermore, the gear device 1 is not limited to a structure which is able to take relative rotation between the inner ring 61 and the outer ring 62 of the bearing member 6 out as output, and take a rotation force of the inner ring 61 out as output. For example, a rotation force of the outer ring 62 relatively rotating relative to the inner ring 61 may also be taken out as output.

Furthermore, the lubricant is not limited to a liquid substance such as lubrication oil (oil liquid) or the like, and may be a gel-like substance such as a lubrication grease or the like.

Furthermore, the gear device 1 may comprise an inner roller. That is, in the gear device 1, it is unnecessary to make each of multiple inner pins 4 in direct contact with the inner peripheral surface 321 of the inner pin hole 32, and it may also be that an inner roller is interposed between each of multiple inner pins 4 and the inner pin hole 32. In this case, the inner roller is assembled to the inner pin 4 and may rotate with the inner pin 4 as a shaft.

Furthermore, it is feasible as long as at least a part of each of multiple inner pins 4 is arranged at the same position as the bearing member 6 in the axial direction of the bearing member 6. Therefore, as described in the above embodiments, only one end portion of each of multiple inner pins 4 in a length direction may be arranged at the same position as the bearing member 6 in the axial direction of the bearing member 6, and the other end portion in the length direction protrudes from the bearing member 6. Furthermore, it may be that each of multiple inner pins 4 is received, in its entirety, in a range of the bearing member 6 in the axial direction of the bearing member 6.

Furthermore, it is feasible as long as each of multiple inner pins 4 is held in the inner ring 61 in a self-rotatable state, and it is unnecessary to provide, in the gear device 1, a case where each of multiple inner pins 4 is directly held by the inner ring 61. For example, each of multiple inner pins 4 may be indirectly held by the inner ring 61 by inserting into a holding hole formed in an output shaft, or a bracket, or the like integrated with the inner ring 61.

Furthermore, means of smooth self-rotation of the inner pin 4 relative to the inner ring 61 is not limited to a structure where the lubricant in the lubricant holding space 17 between the inner ring 61 and the outer ring 62 is supplied to the holding hole 611 by the link path 64. For example, even though the lubricant holding space 17 between the inner ring 61 and the outer ring 62 is not connected to the holding hole 611, smooth self-rotation of the inner pin 4 may be achieved by the lubricant injected into the holding hole 611. Or, smooth self-rotation of the inner pin 4 may be achieved by a bearing assembled in the holding hole 611.

Furthermore, it is unnecessary to provide, in the gear device 1, positioning of multiple inner pins 4 relative to the support body 8 in both circumferential and radial directions performed by the support body 8. For example, the support body 8 may have a slit-shaped support hole 82 extending in a radial direction (radially), and only performs positioning of multiple inner pins 4 relative to the support body 8 in the circumferential direction. On the contrary, the support body 8 may also only perform positioning of multiple inner pins 4 relative to the support body 8 in the radial direction.

Furthermore, in the above embodiments, as a structure for obtaining weight balance of the rotation body performing an eccentric motion with respect to the rotation axis Ax1, a void 75 formed in the rotation body (the eccentric shaft 7) and comprising the recess is exemplified, however, configuration of the void 75 is not limited thereto. For example, the void 75 may be formed in the eccentric body inner ring 51 as the rotation body, or both the eccentric body inner ring 51 and the eccentric shaft 7. The void 75 may comprise a recess formed outside the inner peripheral surface of the through-hole 73. Furthermore, the void 75 may also comprise an aperture.

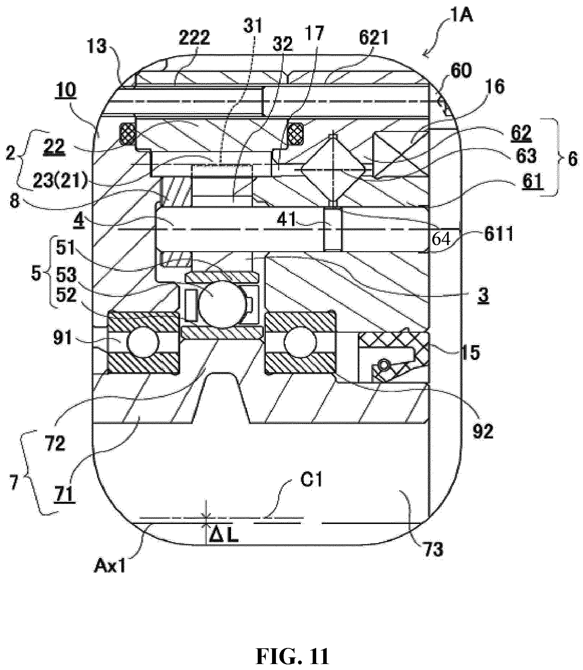

In another embodiment, an internal-meshing planetary gear device 1A (hereinafter, referred to as "gear device 1A" for abbreviation) is shown in FIG. 11, and shape of the inner pin 4 is different from that of the inner pin of the gear device 1 in the above embodiments. Hereinafter, the same structure as that described in the above embodiments is marked with the same reference numeral, and descriptions thereof are omitted appropriately.

In the gear device 1A of the embodiment, each of multiple inner pins 4 has a small-diameter portion 41 at a part thereof. The small-diameter portion 41 is a portion (necking portion) with a diameter smaller than that of other portions of the inner pin 4, that is, portions other than the small-diameter portion 41. In the embodiment, such small-diameter portion 41 is especially arranged at a position facing (opposite to) an opened surface at the holding hole 611 side of the link path 64. In summary, each of multiple inner pins 4 has a small-diameter portion 41 with a diameter smaller than that of other portions, at a position corresponding to the link path 64.

According to this structure, the lubricant in the lubricant holding space 17 is easily fed into the holding hole 611 via the link path 64. That is, a gap between an outer peripheral surface of the inner pin 4 (the small-diameter portion 41) and an inner peripheral surface of the holding hole 611 is enlarged by providing the small-diameter portion 41, so that a space may be ensured at the outlet side of the link path 64, i.e., the holding hole 611 side. Therefore, when a path feeding the lubricant from the lubricant holding space 17 into the holding hole 611 through the link path 64 is considered as a hydraulic circuit, resistance on the hydraulic circuit is reduced, and when the rolling body 63 functions as a pump, the lubricant is easily fed into the holding hole 611. Furthermore, the lubricant fed into the holding hole 611 may be expected to expand for example by a capillary phenomenon along a length direction of the holding hole 611 (a direction parallel to the rotation axis Ax). Therefore, the lubricant between the inner peripheral surface of the holding hole 611 and the inner pin 4 is difficult to be insufficient, and smooth self-rotation of the inner pin 4 relative to the inner ring 61 is easily achieved.

As a deformation example of the embodiment, small-diameter portions 41 may be formed at multiple portions of the inner pin 4 in a length direction. Furthermore, the inner pin 4 may have a tapered or stepped small-diameter portion 41 with a diameter gradually increased in the length direction of the inner pin 4 for example.

The structure (comprising the deformation example) of the embodiment may be suitable for appropriate combination with the structures (comprising the deformation example) described in the above embodiments.

### (Summary)

As explained above, an internal-meshing planetary gear device (1, 1A) according to the invention comprises an internally toothed gear (2), a planetary gear (3) multiple inner pins (4), and a support body (8). The internally toothed gear (2) has a gear body (22) with an annular shape, and multiple pins (23) which are held on an inner peripheral surface (221) of the gear body (22) in a self-rotatable state and constitute internal teeth (21). The planetary gear (3) has external teeth (31) partially meshing with the internal teeth (21). Multiple inner pins (4) revolve in multiple inner pin holes (32) formed in the planetary gear (3) and relatively rotate relative to the gear body (22), in a state where multiple inner pins are inserted into multiple inner pin holes (32) respectively. The support body (8) has an annular shape and supports multiple inner pins (4). Position of the support body (8) is limited by contacting an outer peripheral surface (81) thereof with multiple pins (23).

According to this configuration, multiple inner pins (4) are constrained by the support body (8), which may suppress relative deviation and inclination of multiple inner pins (4). Furthermore, the outer peripheral surface (81) of the support body (8) is in contact with multiple pins (23), thereby limiting position of the support body (8). In summary, centering of the support body (8) is performed by multiple pins (23), as a result, centering of multiple inner pins (4) supported by the support body (8) is also performed by multiple pins (23). Therefore, there are advantages as follows: it is easy to improve centering precision of multiple inner pins (4), and it is difficult to generate bad conditions due to poor centering of multiple inner pins (4).

In an internal-meshing planetary gear device (1, 1A) with a second configuration, based on the first configuration, the outer peripheral surface (81) of the support body (8) relatively rotates relative to the gear body (22) together with multiple inner pins (4), in a state where it is tangential to multiple pins (23).

According to this configuration, the support body (8), the gear body (22) and multiple pins (23) together constitute a needle bearing, and may rotate smoothly.

In an internal-meshing planetary gear device (1, 1A) with a third configuration, based on the first or second configuration, the support body (8) performs positioning of multiple inner pins (4) relative to the support body (8) in both circumferential and radial directions.

According to this configuration, load acting on multiple inner pins (4) is easily dispersed, compared with a structure where positioning of multiple inner pins (4) relative to the support body (8) is performed in only one of the circumferential or radial direction.

In an internal-meshing planetary gear device (1, 1A) with a fourth configuration, based on any one of the first to third configurations, movement of each of multiple pins (23) in a direction of separation from the gear body (22) is limited by contacting each of multiple pins with the outer peripheral surface (81) of the support body (8).

According to this configuration, floating of multiple pins (23) or the like is easily suppressed.

The internal-meshing planetary gear device (1, 1A) according to the invention, further comprises a bearing member (6). The bearing member (6) has an outer ring (62), and an inner ring (61) arranged on an inner side of the outer ring (62) and supported to be relatively rotatable relative to the outer ring (62). The gear body (22) is fixed to the outer ring (62). The planetary gear (3) is arranged between the support body (8) and the inner ring (61) in an axial direction of the support body (8).

According to this configuration, the support body (8) and the inner ring (61) support two end portions of the inner pin (4), therefore it is difficult to generate inclination of the inner pin (4).

In the internal-meshing planetary gear device (1, 1A) according to the invention, the support body (8) and the inner ring (61) are in contact with two end portions of multiple pins (23).

According to this configuration, centering of the support body (8) and the inner ring (61) is achieved at two end portions of the pin (23), therefore it is difficult to generate inclination of the inner pin (4).

In an internal-meshing planetary gear device (1, 1A) with a seventh configuration, based on any one of the first to sixth configurations, surface roughness of the outer peripheral surface (81) of the support body (8) is smaller than that of a surface of the support body (8) adjacent to the outer peripheral surface (81).

According to this configuration, rotation of the support body (8) becomes smoother.

In an internal-meshing planetary gear device (1, 1A) with an eighth configuration, based on any one of the first to seventh configurations, hardness of the outer peripheral surface (81) of the support body (8) is lower than that of a circumferential surface of each of multiple pins (23) and is higher than that of the inner peripheral surface of the gear body (22).

According to this configuration, even though the support body (8) rotates, it is difficult to generate wear powder or the like, so that smooth rotation of the support body (8) is easily maintained for a long period of time.

In an internal-meshing planetary gear device (1, 1A) with a ninth configuration, based on any one of the first to eighth configurations, length of each of multiple pins (23) is greater than thickness of the support body (8).

According to this configuration, it is difficult to generate a bad condition such as "unilateral wear", that is, the outer peripheral surface (81) of the support body (8) is partially worn.

An internal-meshing planetary gear device (1, 1A) with a tenth configuration, based on any one of the first to ninth configurations, further comprises an eccentric body bearing (5) received in an opened portion (33) formed in the planetary gear (3) and swinging the planetary gear (3). The eccentric body bearing (5) has an eccentric body outer ring (52) and an eccentric body inner ring (51) arranged on an inner side of the eccentric body outer ring (52). When a rotation body comprising at least one of the eccentric body inner ring (51) or a member rotating together with the eccentric body inner ring (51) is observed along a rotation axis (Ax1) of the eccentric body inner ring (51), a part of the rotation body on a center (C1) side of the eccentric body outer ring (52) comprises a void (75).

According to this configuration, it is easy to obtain weight balance of the rotation body around the rotation axis (Ax1).

In an internal-meshing planetary gear device (1, 1A) with an eleventh configuration, based on the tenth configuration, the void (75) comprises a recess formed in an inner peripheral surface of a through-hole (73) penetrating the rotation body along the rotation axis (Ax1) of the eccentric body inner ring (51).

According to this configuration, it is easy to obtain weight balance of the rotation body around the rotation axis (Ax1).

An internal-meshing planetary gear device (1, 1A) with a twelfth configuration, based on any one of the first to eleventh configurations, further comprises a bearing member (6). The bearing member (6) has an outer ring (62), and an inner ring (61) arranged on an inner side of the outer ring (62) and supported to be relatively rotatable relative to the outer ring (62). The gear body (22) is fixed to the outer ring (62). Each of multiple inner pins (4) is held in the inner ring (61) in a self-rotatable state.

According to this configuration, each of multiple inner pins (4) is held in the inner ring (61) in a self-rotatable state, therefore, the inner pin (4) itself may self-rotate when the inner pin (4) revolves in the inner pin hole (32). Therefore, loss caused by a frictional resistance between the inner peripheral surface (321) of the inner pin hole (32) and the inner pin (4) may be reduced even without using the inner roller assembled on the inner pin (4) and rotatable with the inner pin (4) as a shaft. Therefore, it is unnecessary to provide an inner roller, so that the gear device has an advantage of being easy to be miniaturized.

An actuator (100) with a thirteenth configuration comprises: the internal-meshing planetary gear device (1, 1A) according to the invention, and a driving source (101) generating a driving force to swing the planetary gear (3).

According to this configuration, the actuator has advantages of being easy to improve centering precision of multiple inner pins (4), and being difficult to generate bad conditions due to poor centering of multiple inner pins (4).

### Explanations of reference numerals

- 1, 1A: Internal-meshing planetary gear device
- 2: Internally toothed gear
- 3: Planetary gear
- 4: Inner pin
- 5: Eccentric body bearing
- 6: Bearing member
- 8: Support body
- 21: Internal tooth
- 22: Gear body
- 23: Pin
- 31: External tooth
- 32: Inner pin hole
- 33: Opened portion
- 51: Eccentric body inner ring
- 52: Eccentric body outer ring
- 61: Inner ring
- 62: Outer ring
- 73: Through-hole
- 75: Void
- 81: Outer peripheral surface
- 100: Actuator
- 101: Driving source
- 221: Inner peripheral surface (of Gear body)
- Ax1: Rotation axis
- C1: Center

## Claims

1. An internal-meshing planetary gear device (1,1A), comprising:
an internally toothed gear (2), comprising a gear body (22) with an annular shape, and a plurality of pins (23) which are held on an inner peripheral surface (221) of the gear body (22) in a self-rotatable state and constitute internal teeth (21);
a planetary gear (3), comprising external teeth (31) partially meshing with the internal teeth (21);
a plurality of inner pins (4), revolving in a plurality of inner pin holes (32) formed in the planetary gear (3) and rotating relative to the gear body (22), in a state where the plurality of inner pins (4) are inserted into the plurality of inner pin holes (32) respectively; and
a support body (8), having an annular shape and supporting the plurality of inner pins (4),
a position of the support body (8) being limited by placing an outer peripheral surface (81) thereof in contact with the plurality of pins (23),
wherein the internal-meshing planetary gear device further comprising a bearing member (6), wherein the bearing member (6) comprising an outer ring (62), and an inner ring (61) arranged on an inner side of the outer ring (62), and wherein the inner ring (61) is supported to be rotatable relative to the outer ring (62),
wherein the gear body (22) is fixed to the outer ring (62),
the planetary gear (3) is arranged between the support body (8) and the inner ring (61) in an axial direction of the support body (8),
**characterized in that**,
the support body (8) and the inner ring (61) are respectively in contact with two end portions of the plurality of pins (23).

2. The internal-meshing planetary gear device (1,1A) of claim 1, wherein the outer peripheral surface (81) of the support body (8) rotates relative to the gear body (22) together with the plurality of inner pins (4), in a state where it is tangential to the plurality of pins (23).

3. The internal-meshing planetary gear device (1,1A) of claim 1 or 2, wherein the support body (8) performs positioning of the plurality of inner pins (4) relative to the support body (8) in both circumferential and radial directions.

4. The internal-meshing planetary gear device (1,1A) of any one of claims 1 to 3, wherein movement of each of the plurality of pins (23) in a direction of separation from the gear body (22) is limited by contacting each of the plurality of pins (23) with the outer peripheral surface (81) of the support body (8).

5. The internal-meshing planetary gear device (1,1A) of any one of claims 1 to 4, wherein a surface roughness of the outer peripheral surface (81) of the support body (8) is smaller than that of a surface of the support body (8) adjacent to the outer peripheral surface (81).

6. The internal-meshing planetary gear device (1,1A) of any one of claims 1 to 5, wherein a hardness of the outer peripheral surface (81) of the support body (8) is lower than that of a circumferential surface of the plurality of pins (23) and is higher than that of the inner peripheral surface (221) of the gear body (22).

7. The internal-meshing planetary gear device (1,1A) of any one of claims 1 to 6, wherein a length of the plurality of pins (23) is greater than a thickness of the support body (8).

8. The internal-meshing planetary gear device (1,1A) of any one of claims 1 to **7,** further comprising an eccentric body bearing (5) received in an opened portion (33) formed in the planetary gear (3) allowing the planetary gear (3) to swing, and wherein the eccentric body bearing (5) comprising an eccentric body outer ring (52) and an eccentric body inner ring (51) arranged on an inner side of the eccentric body outer ring (52),
wherein when a rotation body comprising at least one of the eccentric body inner ring (51) or a member rotating together with the eccentric body inner ring (51) is observed along a rotation axis (Ax1) of the eccentric body inner ring (51), a part of the rotation body on a side of a center (C1) of the eccentric body inner ring (51) comprises a void (75).

9. The internal-meshing planetary gear device (1,1A) of claim 8, wherein the void (75) comprises a recess formed in an inner peripheral surface of a through-hole (73) penetrating the rotation body along the rotation axis (Ax1) of the eccentric body inner ring (51).

10. The internal-meshing planetary gear device (1,1A) of any one of claims 1 to 9, further comprising a bearing member (6), wherein each of the plurality of inner pins (4) is held in the inner ring (61) in a self-rotatable state.

11. An actuator (100), comprising:
the internal-meshing planetary gear device (1,1A) of any one of claims 1 to 10; and
a driving source (101) generating a driving force to swing the planetary gear (3).

## Patentansprüche

1. Innenverzahnte Planetengetriebevorrichtung (1, 1A), umfassend:
ein innenverzahntes Getriebe (2) umfassend einen Getriebekörper (22) mit einer ringförmigen Form und eine Vielzahl von Stiften (23), die an einer Innenumfangsfläche (221) des Getriebekörpers (22) in einem selbstdrehbaren Zustand gehalten sind und Innenverzahnungen (21) bilden;
ein Planetengetriebe (3) umfassend Außenverzahnungen (31), die teilweise mit den Innenverzahnungen (21) verzahnt sind;
eine Vielzahl von inneren Stiften (4), die sich in einer Vielzahl von inneren Stiftlöchern (32), die in dem Planetengetriebe (3) ausgebildet sind, drehen und sich relativ zu dem Getriebekörper (22) drehen, in einem Zustand, in dem die Vielzahl von inneren Stiften (4) jeweils in die Vielzahl von inneren Stiftlöchern (32) eingeführt ist; und
einen Stützkörper (8), der eine ringförmige Form aufweist und die Vielzahl von inneren Stiften (4) stützt,
wobei eine Position des Stützkörpers (8) dadurch begrenzt wird, dass eine Außenumfangsfläche (81) davon mit der Vielzahl von Stiften (23) in Kontakt gebracht wird,
wobei die innenverzahnte Planetengetriebevorrichtung ferner ein Lagerelement (6) umfasst, wobei das Lagerelement (6) einen Außenring (62) und einen Innenring (61) umfasst, der auf einer Innenseite des Außenrings (62) angeordnet ist, und wobei der Innenring (61) so gestützt ist, dass er relativ zum Außenring (62) drehbar ist,
wobei der Getriebekörper (22) am Außenring (62) fixiert ist,
das Planetengetriebe (3) in einer axialen Richtung des Stützkörpers (8) zwischen dem Stützkörper (8) und dem Innenring (61) angeordnet ist,
**dadurch gekennzeichnet, dass**
der Stützkörper (8) und der Innenring (61) jeweils mit zwei Endbereichen der Vielzahl von Stiften (23) in Kontakt stehen.

2. Innenverzahnte Planetengetriebevorrichtung (1, 1A) gemäß Anspruch 1, wobei sich die Außenumfangsfläche (81) des Stützkörpers (8) relativ zum Getriebekörper (22) zusammen mit der Vielzahl von inneren Stiften (4) dreht, in einem Zustand, in dem sie tangential zu der Vielzahl von Stiften (23) steht.

3. Innenverzahnte Planetengetriebevorrichtung (1, 1A) gemäß Anspruch 1 oder 2, wobei der Stützkörper (8) die Positionierung der Vielzahl von inneren Stiften (4) relativ zum Stützkörper (8) sowohl in Umfangsrichtung als auch in radialer Richtung durchführt.

4. Innenverzahnte Planetengetriebevorrichtung (1, 1A) gemäß einem der Ansprüche 1 bis 3, wobei die Bewegung jedes der Vielzahl von Stiften (23) in einer Richtung der Trennung vom Getriebekörper (22) dadurch begrenzt wird, dass jeder der Vielzahl von Stiften (23) mit der Außenumfangsfläche (81) des Stützkörpers (8) in Kontakt kommt.

5. Innenverzahnte Planetengetriebevorrichtung (1, 1A) gemäß einem der Ansprüche 1 bis 4, wobei eine Oberflächenrauheit der Außenumfangsfläche (81) des Stützkörpers (8) kleiner ist als die einer an die Außenumfangsfläche (81) angrenzenden Oberfläche des Stützkörpers (8).

6. Innenverzahnte Planetengetriebevorrichtung (1, 1A) nach einem der Ansprüche 1 bis 5, wobei eine Härte der Außenumfangsfläche (81) des Stützkörpers (8) niedriger ist als die einer Umfangsfläche der Vielzahl von Stiften (23) und höher ist als die der Innenumfangsfläche (221) des Getriebekörpers (22).

7. Innenverzahnte Planetengetriebevorrichtung (1, 1A) gemäß einem der Ansprüche 1 bis 6, wobei eine Länge der Vielzahl von Stiften (23) größer ist als eine Dicke des Stützkörpers (8).

8. Innenverzahnte Planetengetriebevorrichtung (1, 1A) gemäß einem der Ansprüche 1 bis 7, ferner umfassend ein Exzenterkörperlager (5), das in einem im Planetengetriebe (3) ausgebildeten geöffneten Bereich (33) aufgenommen ist, wodurch das Planetengetriebe (3) schwingen kann, und wobei das Exzenterkörperlager (5) einen Exzenterkörper-Außenring (52) und einen Exzenterkörper-Innenring (51) umfasst, der auf einer Innenseite des Exzenterkörper-Außenrings (52) angeordnet ist,
wobei, wenn ein Drehkörper umfassend mindestens eines des Exzenterkörper-Innenrings (51) oder eines sich zusammen mit dem Exzenterkörper-Innenring (51) drehenden Elements entlang einer Drehachse (Ax1) des Exzenterkörper-Innenrings (51) betrachtet wird, ein Teil des Drehkörpers auf einer Seite eines Mittelpunkts (C1) des Exzenterkörper-Innenrings (51) einen Hohlraum (75) umfasst.

9. Innenverzahnte Planetengetriebevorrichtung (1, 1A) gemäß Anspruch 8, wobei der Hohlraum (75) eine Ausnehmung umfasst, die in einer Innenumfangsfläche eines Durchgangslochs (73) ausgebildet ist, das den Rotationskörper entlang der Drehachse (Ax1) des Exzenterkörper-Innenrings (51) durchdringt.

10. Innenverzahnte Planetengetriebevorrichtung (1, 1A) gemäß einem der Ansprüche 1 bis 9, ferner umfassend ein Lagerelement (6), wobei jeder der Vielzahl von inneren Stiften (4) im Innenring (61) in einem selbstdrehbaren Zustand gehalten wird.

11. Aktuator (100), umfassend:
die innenverzahnte Planetengetriebevorrichtung (1, 1A) gemäß einem der Ansprüche 1 bis 10; und
eine Antriebsquelle (101), die eine Antriebskraft erzeugt, um das Planetengetriebe (3) zu versetzen.

## Revendications

1. Dispositif d'engrenage planétaire à engrènement intérieur (1,1A), comprenant :
une roue à denture intérieure (2), comprenant un corps de roue dentée (22) ayant une forme annulaire, et une pluralité de broches (23) qui sont maintenues sur une surface périphérique intérieure (221) du corps de roue dentée (22) dans un état permettant leur rotation sur elles-mêmes et constituent des dents intérieures (21) ;
une roue satellite (3), comprenant des dents extérieures (31) engrenant partiellement avec les dents intérieures (21) ;
une pluralité de broches intérieures (4), effectuant un mouvement de révolution dans une pluralité de trous pour broches intérieures (32) formés dans la roue satellite (3) et tournant par rapport au corps de roue dentée (22), dans un état dans lequel les broches de la pluralité de broches intérieures (4) sont insérées respectivement dans les trous de la pluralité de trous pour broches intérieures (32) ; et
un corps de support (8), ayant une forme annulaire et supportant la pluralité de broches intérieures (4),
une position du corps de support (8) étant limitée par la mise en contact d'une surface périphérique extérieure (81) de celui-ci avec la pluralité de broches (23),
dans lequel le dispositif d'engrenage planétaire à engrènement intérieur comprend en outre un élément de palier (6), dans lequel l'élément de palier (6) comprend une bague extérieure (62) et une bague intérieure (61) disposée du côté intérieur de la bague extérieure (62), et dans lequel la bague intérieure (61) est supportée de manière à pouvoir tourner par rapport à la bague extérieure (62),
dans lequel le corps de roue dentée (22) est fixé à la bague extérieure (62),
la roue satellite (3) est disposée entre le corps de support (8) et la bague intérieure (61) dans une direction axiale du corps de support (8),
**caractérisé en ce que**
le corps de support (8) et la bague intérieure (61) sont respectivement en contact avec deux portions d'extrémité de la pluralité de broches (23).

2. Dispositif d'engrenage planétaire à engrènement intérieur (1,1A) selon la revendication 1, dans lequel la surface périphérique extérieure (81) du corps de support (8) tourne par rapport au corps de roue dentée (22) conjointement avec la pluralité de broches intérieures (4), dans un état dans lequel elle est tangente à la pluralité de broches (23).

3. Dispositif d'engrenage planétaire à engrènement intérieur (1,1A) selon la revendication 1 ou 2, dans lequel le corps de support (8) effectue le positionnement de la pluralité de broches intérieures (4) par rapport au corps de support (8) à la fois dans les directions circonférentielle et radiale.

4. Dispositif d'engrenage planétaire à engrènement intérieur (1,1A) selon l'une quelconque des revendications 1 à 3, dans lequel le mouvement de chacune des broches de la pluralité de broches (23) dans une direction d'éloignement du corps de roue dentée (22) est limité par la mise en contact de chacune des broches de la pluralité de broches (23) avec la surface périphérique extérieure (81) du corps de support (8).

5. Dispositif d'engrenage planétaire à engrènement intérieur (1,1A) selon l'une quelconque des revendications 1 à 4, dans lequel une rugosité de surface de la surface périphérique extérieure (81) du corps de support (8) est inférieure à celle d'une surface du corps de support (8) adjacente à la surface périphérique extérieure (81).

6. Dispositif d'engrenage planétaire à engrènement intérieur (1,1A) selon l'une quelconque des revendications 1 à 5, dans lequel une dureté de la surface périphérique extérieure (81) du corps de support (8) est inférieure à celle d'une surface circonférentielle de la pluralité de broches (23) et est supérieure à celle de la surface périphérique intérieure (221) du corps de roue dentée (22).

7. Dispositif d'engrenage planétaire à engrènement intérieur (1,1A) selon l'une quelconque des revendications 1 à 6, dans lequel une longueur de la pluralité de broches (23) est supérieure à une épaisseur du corps de support (8).

8. Dispositif d'engrenage planétaire à engrènement intérieur (1,1A) selon l'une quelconque des revendications 1 à 7,
comprenant en outre un palier de corps excentrique (5) reçu dans une portion ouverte (33) formée dans la roue satellite (3), permettant à la roue satellite (3) d'osciller, et dans lequel le palier de corps excentrique (5) comprend une bague extérieure de corps excentrique (52) et une bague intérieure de corps excentrique (51) disposée du côté intérieur de la bague extérieure de corps excentrique (52),
dans lequel, lorsqu'un corps rotatif comprenant au moins un élément parmi la bague intérieure de corps excentrique (51) et un élément tournant conjointement avec la bague intérieure de corps excentrique (51) est observé suivant un axe de rotation (Ax1) de la bague intérieure de corps excentrique (51), une partie du corps rotatif située du côté d'un centre (C1) de la bague intérieure de corps excentrique (51) comprend un espace vide (75).

9. Dispositif d'engrenage planétaire à engrènement intérieur (1,1A) selon la revendication 8, dans lequel l'espace vide (75) comprend un évidement formé dans une surface périphérique intérieure d'un trou traversant (73) traversant le corps rotatif suivant l'axe de rotation (Ax1) de la bague intérieure de corps excentrique (51).

10. Dispositif d'engrenage planétaire à engrènement intérieur (1,1A) selon l'une quelconque des revendications 1 à 9,
comprenant en outre un élément de palier (6), dans lequel chacune des broches de la pluralité de broches intérieures (4) est maintenue dans la bague intérieure (61) dans un état permettant sa rotation sur elle-même.

11. Actionneur (100), comprenant :
le dispositif d'engrenage planétaire à engrènement intérieur (1,1A) selon l'une quelconque des revendications 1 à 10 ; et
une source d'entraînement (101) générant une force d'entraînement pour faire osciller la roue satellite (3).
